# EUROPEAN PATENT APPLICATION

(11) **EP 4 807 816 A1**
(43) Date of publication of application: **16.09.2026**
(21) Application number: 24915114.3
(22) Date of filing: 18.12.2024
(51) Int. Cl.: H01M 4/62

(54) **POSITIVE ELECTRODE MATERIAL AND PREPARATION METHOD THEREFOR, POSITIVE ELECTRODE SHEET, BATTERY, AND ELECTRIC DEVICE**

(30) Priority: 02.01.2024 CN 202410002213
(71) Applicant: Contemporary Amperex Technology Co., Limited, Ningde, Fujian 352100 (CN)
(72) Inventor: LI, Sheng, Ningde, Fujian 352100 (CN); NI, Huan, Ningde, Fujian 352100 (CN)
(74) Representative: Ziebig Hengelhaupt Intellectual Property Attorneys Patentanwaltskanzlei PartGmbB
(86) International application number: PCT/CN2024/140324
(87) International publication number: WO 2025/145899

(57) **Abstract**

Provided are a positive electrode material, a method for preparing the positive electrode material, a positive electrode sheet, a battery, and an electric device. The positive electrode material comprises a core and a shell covering the core, the core and the shell both comprise primary particles, most of the primary particles in the core are distributed in the radial direction of the core, and the distribution of most of the primary particles in the shell is different from the radial distribution in the core. The particle strength of the positive electrode material is improved, thereby improving the cycle life, high-temperature storage performance and energy density of the battery.

## Description

The present application is based on and claims priority to Chinese Patent Application No. 202410002213.1 filed on January 2, 2024, the content of which is hereby incorporated herein by reference in its entirety.

### TECHNICAL FIELD

The present application relates to the technical field of lithium batteries, and in particular to a positive electrode material, a method for preparing the positive electrode material, a positive electrode plate, a battery, and an electric device.

### BACKGROUND

In recent years, with the increasingly widespread application of secondary batteries, they have been extensively used in energy storage power systems such as hydropower, thermal power, wind power, and solar power stations, as well as in various fields such as electric tools, electric bicycles, electric motorcycles, electric vehicles, military equipment, and aerospace. As secondary batteries have achieved great development, higher requirements have been placed on aspects such as energy density, cycle performance, and rate capability.

### SUMMARY

The present application has been made in view of the above problems, and an object of the present application is to provide a positive electrode material, a method for preparing the positive electrode material, a positive electrode plate, a battery, and an electric device. In the charging and discharging process, the positive electrode material of the present application features a more uniform stress distribution caused by lattice contraction and expansion, which improves the particle strength of the material, thereby improving the cycle life, high-temperature storage performance, and energy density of the battery.

To achieve the above objective, a first aspect of the present application provides a positive electrode material. The positive electrode material includes an inner core and a shell coating the inner core, the inner core and the shell each including primary particles, where most of the primary particles in the inner core are distributed in a radial direction of the inner core, and a distribution of most of the primary particles in the shell is different from a radial distribution of the inner core; and
the inner core and the shell independently include Liₐ(NiₓCo_{y}M1_{(1-x-y)})_{1-b}M2_{b}O_{z}, where
the M1 of the inner core and the shell independently includes one or two elements of Mn and Al,
the M2 of the inner core and the shell independently includes one or more elements of Ti, Na, K, Zr, Sr, Sb, Mo, W, Nb, Y, Te, La, B, F, Cl, and P,
the a of the inner core and the shell is independently greater than 0.9 and less than 1.2,
the x of the inner core and the shell is independently greater than or equal to 0.5 and less than 1,
the y of the inner core and the shell is independently greater than 0 and less than or equal to 0.2,
the 1-x-y of the inner core and the shell is independently greater than 0 and less than or equal to 0.50,
the b of the inner core and the shell is independently greater than 0 and less than or equal to 0.02, and
the z of the inner core and the shell is independently greater than 1.8 and less than 2.2.

Therefore, this is beneficial for improving the particle strength of the positive electrode material, thereby improving the cycle life, high-temperature storage performance, and energy density of the battery.

In any embodiment, the a of the inner core and the shell is independently 1; and/or
the x of the inner core and the shell is independently greater than or equal to 0.5 and less than or equal to 0.9; and/or
the y of the inner core and the shell is independently greater than or equal to 0.05 and less than or equal to 0.2; and/or
the 1-x-y of the inner core and the shell is independently greater than 0 and less than or equal to 0.3; and/or
the z of the inner core and the shell is independently 2.

In any embodiment, the M2 of the inner core includes one or more elements of Zr, Sr, Y, Na, K, W, Nb, Sb, La, Ti, and Mo; and the M2 of the shell includes one or more elements of Zr, Sr, Sb, La, F, Cl, B, P, Ti, and Te.

During cycling, the inner core is prone to cracking, and the shell mainly undergoes interfacial ion exchange with the electrolytic solution. Doping specific elements into the inner core and the shell helps to improve the strength of the inner core, prolong the cycle life of the battery, increase the migration rate of lithium ions, improve the kinetic performance of the battery, and improve the structural stability and corrosion resistance of the positive electrode material.

In any embodiment, an aspect ratio of the primary particles of the inner core is greater than an aspect ratio of the primary particles of the shell.

In any embodiment, the aspect ratio of the primary particles of the inner core is greater than or equal to 1.5 and less than or equal to 8, optionally greater than or equal to 1.8 and less than or equal to 5.

Therefore, the aspect ratio of the primary particles of the inner core is greater than the aspect ratio of the primary particles of the shell, which is beneficial for improving the cycle performance, high-temperature storage performance, and rate capability of the battery.

In any embodiment, the x of the inner core is greater than the x of the shell.

In any embodiment, a ratio of the x of the inner core to the x of the shell is greater than 1 and less than 2.

Therefore, it is beneficial for improving the electrochemical activity of the positive electrode material, reducing the difference in lithium concentration between the inner core and the shell during the charging and discharging process so as to improve the cycle performance of the battery, reducing the lattice deformation of the shell so as to protect the structure of the inner core, and reducing the corrosion of the electrolytic solution on the inner core and the occurrence of side reactions so as to improve the cycle performance, specific capacity, and high-temperature storage performance of the battery.

In any embodiment, a ratio of an average diameter of the inner core to an average thickness of the shell is 1:1 to 100:1, optionally 1:1 to 20:1, and more optionally 3:1 to 10:1.

Therefore, the cracking and detachment of the shell of the positive electrode material are reduced during the charging and discharging process, the corrosion of the electrolytic solution on the inner core is reduced, and the cycle performance, high-temperature storage performance, and energy density of the battery are improved.

In any embodiment, the positive electrode material further includes a first coating layer coating the shell and a second coating layer coating the first coating layer, where the first coating layer coats the shell in an island shape, and/or the second coating layer continuously coats the first coating layer.

Therefore, the island-shaped coating of the first coating layer improves the adhesion between the primary particles of the shell, thereby improving the structural strength of the positive electrode material. The arrangement of two coating layers helps to increase the migration rate of lithium ions in the positive electrode material and the ion exchange rate between the positive electrode material and the electrolytic solution, and helps to reduce side reactions between the positive electrode material and the electrolytic solution, thereby prolonging the cycle life of the battery.

In any embodiment, the first coating layer and the second coating layer independently include one or more elements of Sr, B, Al, Ti, Zr, Nb, W, F, La, Ce, C, and Co.

Therefore, the energy density, cycle life, and storage life of the battery are improved.

In any embodiment, a Dv50 particle size of the positive electrode material is greater than or equal to 5 µm and less than or equal to 20 µm, optionally greater than 5 µm and less than or equal to 15 µm; and/or
a Span of the positive electrode material is greater than or equal to 0.4 and less than or equal to 5, optionally greater than or equal to 0.5 and less than or equal to 2, where
the Span of the positive electrode material = (Dv90 particle size - Dv10 particle size)/Dv50 particle size; and/or
a BET specific surface area of the positive electrode material at a temperature of liquid nitrogen is 0.3 cm²/g to 1.5 cm²/g, optionally 0.36 cm²/g to 0.89 cm²/g; and/or
a compaction density of the positive electrode material at 30 MPa is 3.2 g/cm³ to 3.5 g/cm³.

The Dv50 particle size of the positive electrode material within the above range improves the compaction density and volumetric energy density of the positive electrode material, and reduces the material cracking during cycling, thereby improving the cycle life and the high-temperature storage performance of the battery.

The Span value of the positive electrode material within the above range increases the compaction density of the positive electrode material, thereby improving the energy density of the battery.

The BET of the positive electrode material within the above range increases the electrochemically active sites of the positive electrode material while inhibiting the side reactions between the positive electrode material and the electrolytic solution, thereby improving the energy density and cycle performance of the battery.

In any embodiment, a mass content of free lithium in the positive electrode material is less than 3000 ppm.

The mass content of free lithium in the positive electrode material within the above range lowers the risk of gelation during the processing of the electrode plate, improves the processability, reduces the side reactions between the positive electrode material and the electrolytic solution, and lowers the gas production volume caused by the side reactions.

A second aspect of the present application provides a method for preparing a positive electrode material. The method includes the following steps:
adding a first solution to an alkali or a solution thereof for a reaction, at an addition rate of the first solution of 12 L/h to 29 L/h, to obtain a precursor 1, where the first solution includes a nickel source, a cobalt source, and a source of an M1 element;
adding a second solution to the precursor 1 and the alkali or the solution thereof for a reaction, at an addition rate of the second solution of 12 L/h to 25 L/h, to obtain a precursor 2, where the second solution includes the nickel source, the cobalt source, and the source of the M1 element; and
mixing the precursor 2, a lithium source, and a source of an M2 element, and sintering the mixture to obtain a sintered product, i.e., the positive electrode material.

Therefore, this is beneficial for improving the particle strength of the positive electrode material, thereby improving the cycle life, high-temperature storage performance, and energy density of the battery.

In any embodiment, the positive electrode material includes an inner core and a shell coating the inner core, the inner core and the shell each including primary particles, where most of the primary particles in the inner core are distributed in a radial direction of the inner core, and a distribution of most of the primary particles in the shell is different from a radial distribution of the inner core; and the inner core and the shell independently include Liₐ(NiₓCo_{y}M1_{(1-x-y)})_{1-b}M2_{b}O_{z}, where
the M1 of the inner core and the shell independently includes one or two elements of Mn and Al,
the M2 of the inner core and the shell independently includes one or more elements of Ti, Na, K, Zr, Sr, Sb, Mo, W, Nb, Y, Te, La, B, F, Cl, and P,
the a of the inner core and the shell is independently greater than 0.9 and less than 1.2,
the x of the inner core and the shell is independently greater than or equal to 0.5 and less than 1,
the y of the inner core and the shell is independently greater than 0 and less than or equal to 0.2,
the 1-x-y of the inner core and the shell is independently greater than 0 and less than or equal to 0.50,
the b of the inner core and the shell is independently greater than 0 and less than or equal to 0.02, and
the z of the inner core and the shell is independently greater than 1.8 and less than 2.2.
In any embodiment, the method further includes the following steps:
mixing the sintered product with a first coating starting material, and sintering the mixture to obtain an intermediate product; and
mixing the intermediate product with a second coating starting material, and sintering the mixture to obtain the positive electrode material including two coating layers, where
the positive electrode material includes an inner core, a shell coating the inner core, a first coating layer coating the shell, and a second coating layer coating the first coating layer, the inner core and the shell each including primary particles, where most of the primary particles in the inner core are distributed in a radial direction of the inner core, and a distribution of most of the primary particles in the shell is different from a radial distribution of the inner core; and the inner core and the shell independently include Liₐ(NiₓCo_{y}M1_{(1-x-y})_{1-b}M2_{b}O_{z}, and the first coating layer and the second coating layer independently include one or more elements of Sr, B, Al, Ti, Zr, Nb, W, F, La, Ce, C, and Co, optionally one or more elements of Sr, B, Al, Zr, Nb, W, F, La, Ce, C, and Co, where
the M1 of the inner core and the shell independently includes one or two elements of Mn and Al,
the M2 of the inner core and the shell independently includes one or more elements of Ti, Na, K, Zr, Sr, Sb, Mo, W, Nb, Y, Te, La, B, F, Cl, and P,
the a of the inner core and the shell is independently greater than 0.9 and less than 1.2,
the x of the inner core and the shell is independently greater than or equal to 0.5 and less than 1,
the y of the inner core and the shell is independently greater than 0 and less than or equal to 0.2,
the 1-x-y of the inner core and the shell is independently greater than 0 and less than or equal to 0.50,
the b of the inner core and the shell is independently greater than 0 and less than or equal to 0.02, and
the z of the inner core and the shell is independently greater than 1.8 and less than 2.2.

In any embodiment, in the step of preparing the precursor 2, after the reaction, a reaction product is subjected to aging to obtain the precursor 2.

In any embodiment, in the step of preparing the precursor 2, a temperature of the aging is 30 °C to 80 °C, and/or a duration of the aging is 5 h to 24 h.

In any embodiment,
in the steps of preparing the precursor 1 and the precursor 2, a temperature of the reaction is independently 40 °C to 80 °C; and/or
in the steps of preparing the precursor 1 and the precursor 2, the reaction is performed in an inert gas atmosphere; and/or
in the steps of preparing the precursor 1 and the precursor 2, the reaction is performed at a pH value of 9 to 12; and/or
in the step of preparing the precursor 2, after the reaction or aging, the reaction product is washed and dried, where a temperature of the drying is 100 °C to 180 °C, and a duration of the drying is 5 h to 15 h; and/or
in the step of preparing the sintered product, a temperature of the sintering is 750 °C to 950 °C; and/or
in the step of preparing the sintered product, a duration of the sintering is 10 h to 30 h; and/or
in the step of preparing the sintered product, the sintering is performed in an oxygen-containing atmosphere; and/or
in the steps of preparing the intermediate product and the positive electrode material including two coating layers, a temperature of the sintering is independently 250 °C to 700 °C; and/or
in the steps of preparing the intermediate product and the positive electrode material including two coating layers, a duration of the sintering is independently 5 h to 20 h; and/or
in the steps of preparing the intermediate product and the positive electrode material including two coating layers, the sintering is performed in an oxygen-containing atmosphere.

In any embodiment,
a Dv50 particle size of the precursor 1 is 4.3 µm to 17.3 µm; and/or
a Dv50 particle size of the precursor 2 is 5 µm to 20 µm; and/or
in the first solution and the second solution, a molar percentage of a nickel element in a total metal element is independently greater than 0.5 and less than 1; and/or
in the first solution and the second solution, a molar percentage of a cobalt element in a total metal element is independently greater than 0 and less than 0.2; and/or
a molar ratio of the precursor 2 to a lithium element in the lithium source is 5:6 to 10:9; and/or
a molar ratio of a lithium element in the lithium source to the M2 element in the source of the M2 element is a:b, where the a is greater than 0.9 and less than 1.2, and the b is greater than 0 and less than or equal to 0.02; and/or
a mass ratio of the first coating starting material to the sintered product is greater than 0 and less than or equal to 1%, optionally greater than 0 and less than or equal to 0.5%; and/or
a mass ratio of the second coating starting material to the intermediate product is greater than 0 and less than or equal to 1%, optionally greater than 0 and less than or equal to 0.5%.

A third aspect of the present application provides a positive electrode plate. The positive electrode plate includes the positive electrode material according to the first aspect of the present application or a positive electrode material prepared by the method according to the second aspect of the present application.

A fourth aspect of the present application provides a battery. The battery includes the positive electrode material according to the first aspect of the present application, the positive electrode material prepared by the method according to the second aspect of the present application, or the positive electrode plate according to the third aspect of the present application.

A fifth aspect of the present application provides an electric device. The electric device includes the battery according to the fourth aspect of the present application.

### BRIEF DESCRIPTION OF THE DRAWINGS

FIG. 1 is a schematic structural view showing a distribution of primary particles in a radial direction of an inner core according to the present application.
FIG. 2 is a schematic view of a battery cell according to an embodiment of the present application.
FIG. 3 is an exploded view of the battery cell according to an embodiment of the present application shown in FIG. 2.
FIG. 4 is a schematic view of a battery module according to an embodiment of the present application.
FIG. 5 is a schematic view of a battery pack according to an embodiment of the present application.
FIG. 6 is an exploded view of the battery pack according to an embodiment of the present application shown in FIG. 5.
FIG. 7 is a schematic view of an electric device using a battery cell as a power source according to an embodiment of the present application.
FIG. 8 is a schematic view showing distribution directions of primary particles of inner core and primary particles of shell of the positive electrode material according to Example 1 of the present application.

### Description of the reference numerals:

1: battery pack; 2: upper case body; 3: lower case body; 4: battery module; 5: battery cell; 51: housing; 52: electrode assembly; 53: top cover assembly; 81 primary particle of inner core; 82 primary particle of shell

### DETAILED DESCRIPTION

Hereinafter, embodiments specifically disclosing a negative electrode active material and a preparation method therefor, a positive electrode plate, a negative electrode plate, a battery cell, a battery module, a battery pack, and an electric device of the present application are described in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Furthermore, the drawings and the following descriptions are provided to enable those skilled in the art to fully understand the present application and are not intended to limit the subject matter recited in the claims.

The "ranges" disclosed in the present application are defined by lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60 to 120 and 80 to 110 are listed for a particular parameter, it is understood that ranges of 60 to 110 and 80 to 120 are also anticipated. Furthermore, if the minimum range values listed are 1 and 2, and the maximum range values listed are 3, 4, and 5, then the following ranges can all be anticipated: 1 to 3, 1 to 4, 1 to 5, 2 to 3, 2 to 4, and 2 to 5. In the present application, unless otherwise specified, the numerical range "a to b" represents an abbreviated representation of any combination of real numbers between a and b, where both a and b are real numbers. For example, the numerical range "0 to 5" indicates that all real numbers within the range of "0 to 5" are listed herein, and "0 to 5" is merely an abbreviated representation of a combination of these numerical values. Additionally, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions.

Unless otherwise specified, all technical features and optional technical features of the present application can be combined with one another to form new technical solutions.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b), or the like.

Unless otherwise specified, Dv50 particle size according to the present application refers to the particle size at a cumulative volume distribution value of 50%.

### [Battery Cell]

Battery cells, also known as rechargeable batteries or storage batteries, refer to batteries that can continue to be used by reactivating their active materials through charging after discharging.

Typically, the battery cell includes a positive electrode plate, a negative electrode plate, a separator, and an electrolytic solution. During the charging and discharging process of the battery, active ions (such as lithium ions) are intercalated and deintercalated back and forth between the positive electrode plate and the negative electrode plate. The separator is disposed between the positive electrode plate and the negative electrode plate to primarily prevent positive and negative electrodes from short-circuiting, while allowing the passage of active ions. The electrolytic solution is between the positive electrode plate and the negative electrode plate, and primarily functions to conduct active ions.

### [Positive Electrode Material]

One embodiment of the present application provides a positive electrode material. The positive electrode material includes an inner core and a shell coating the inner core, the inner core and the shell each including primary particles, where most of the primary particles in the inner core are distributed in the radial direction of the inner core, and the distribution of most of the primary particles in the shell is different from the radial distribution of the inner core; and
the inner core and the shell independently include Liₐ(NiₓCo_{y}M1_{(1-x-y)})_{1-b}M2_{b}O_{z}, where
the M1 of the inner core and the shell independently includes one or two elements of Mn and Al,
the M2 of the inner core and the shell independently includes one or more elements of Ti, Na, K, Zr, Sr, Sb, Mo, W, Nb, Y, Te, La, B, F, Cl, and P,
the a of the inner core and the shell is independently greater than 0.9 and less than 1.2 (for example, 0.95, 1, 1.05, 1.1, 1.15, 1.18, or a range formed by any of the foregoing values),
the x of the inner core and the shell is independently greater than or equal to 0.5 and less than 1 (for example, 0.5, 0.6, 0.7, 0.8, 0.9, 0.95, or a range formed by any of the foregoing values),
the y of the inner core and the shell is independently greater than 0 and less than or equal to 0.2 (for example, 0.01, 0.02, 0.05, 0.07, 0.09, 0.1, 0.12, 0.14, 0.15, 0.17, 0.18, 0.2, or a range formed by any of the foregoing values),
the 1-x-y of the inner core and the shell is independently greater than 0 and less than or equal to 0.50 (for example, 0.1, 0.2, 0.3, 0.4, 0.45, 0.5, or a range formed by any of the foregoing values),
the b of the inner core and the shell is independently greater than 0 and less than or equal to 0.02 (for example, 0.001, 0.003, 0.005, 0.007, 0.008, 0.009, 0.01, 0.012, 0.015, 0.016, 0.018, 0.02, or a range formed by any of the foregoing values), and
the z of the inner core and the shell is independently greater than 1.8 and less than 2.2 (for example, 1.85, 1.9, 1.95, 2, 2.1, 2.15, or a range formed by any of the foregoing values).

Traditional high-nickel polycrystalline ternary positive electrode materials are prone to cracking during cycling. Under high-voltage conditions, as the depth of charge and discharge increases, the cracking phenomenon of the material becomes more severe. Thus, a large number of unmodified active surfaces are exposed, leading to faster degradation of material cycling or even a "plummet" phenomenon.

Although the mechanism remains unclear, the present applicant has unexpectedly discovered that: in the positive electrode material of the present application, most of the primary particles in the inner core are distributed in the radial direction of the inner core, which is beneficial for improving the transmission and diffusion of lithium ions; most of the primary particles in the shell are not distributed in the radial direction of the inner core, which is beneficial for reducing the erosion of the electrolytic solution, reducing the material nonuniformity and local stress concentration caused by the deintercalation and intercalation of lithium ions during the charging and discharging process, and reducing the cracking and deactivation of the positive electrode material; and on the whole, this is beneficial for improving the stress nonuniformity caused by lattice contraction and expansion of the positive electrode material during the charging and discharging process, so as to improve the particle strength of the material, thereby improving the cycle life, high-temperature storage performance, and energy density of the battery.

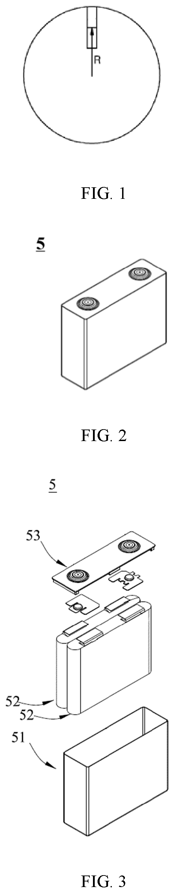

In the present application, the primary particle has a long-axis direction, which refers to the maximum length direction of the maximum surface of the primary particle. The radial distribution has a definition well known in the art. Specifically, in some embodiments, the radial distribution of the primary particles along the inner core may refer to a structure where the long-axis direction of the primary particles is arranged within an angle of about ± 10° relative to the direction (R) toward the center of the inner core, as shown in FIG. 1.

In the present application, whether the primary particles of the inner core or the shell are distributed in the radial direction of the inner core can be tested by using a conventional method in the art. For example, surface scanning can be performed on the primary particles of the positive electrode material by using an SEM-EDS integrated instrument so as to determine the boundaries of the inner core and the shell, and a radial line can be drawn along the core of the inner core on a scanning electron microscope image; and an angle measurement instrument can be used to measure the included angles θ between primary particles of a plurality of inner cores/shells and the radial direction of the inner core to obtain the range of the included angles θ between the primary particles of the inner core and the radial direction of the inner core, and determine whether the primary particles of the inner core are distributed in the radial direction of the inner core based on the range of the included angle θ.

In the present application, "most" refers to a quantity greater than 50%, optionally a quantity greater than or equal to 60%, a quantity greater than or equal to 70%, a quantity greater than or equal to 80%, a quantity greater than or equal to 90%, a quantity greater than or equal to 95%, a quantity greater than or equal to 98%, a quantity greater than or equal to 99%, a quantity greater than or equal to 99.5%, or a quantity greater than or equal to 99.9%.

In the present application, "radial direction of inner core" refers to a direction of a connecting line between the core of the inner core and the edge of the inner core.

In some embodiments, the a of the inner core and the shell is independently 1; and/or
the x of the inner core and the shell is independently greater than or equal to 0.5 and less than or equal to 0.9; and/or
the y of the inner core and the shell is independently greater than or equal to 0.05 and less than or equal to 0.2; and/or
the 1-x-y of the inner core and the shell is independently greater than 0 and less than or equal to 0.3; and/or
the z of the inner core and the shell is independently 2; and/or
the M1 of the inner core and the shell is Mn; and/or
the M2 of the inner core and the shell independently includes one or more elements of Zr and Y.

In some embodiments, the M2 of the inner core includes one or more elements of Zr, Sr, Y, Na, K, W, Nb, Sb, La, Ti, and Mo; and the M2 of the shell includes one or more elements of Zr, Sr, Sb, La, F, Cl, B, P, Ti, and Te.

During cycling, the inner core is prone to cracking, and the shell mainly undergoes interfacial ion exchange with the electrolytic solution. Doping specific elements into the inner core and the shell helps to improve the strength of the inner core, prolong the cycle life of the battery, increase the migration rate of lithium ions, improve the kinetic performance of the battery, and improve the structural stability and corrosion resistance of the positive electrode material.

In some embodiments, the aspect ratio of the primary particles of the inner core is greater than the aspect ratio of the primary particles of the shell; and
optionally, the aspect ratio of the primary particles of the inner core is greater than or equal to 1.5 and less than or equal to 8, optionally greater than or equal to 1.8 and less than or equal to 5, for example, 1.5, 2, 3, 4, 5, 6, 7, 8, or a range formed by any of the foregoing values.

Therefore, the aspect ratio of the primary particles of the inner core is greater than the aspect ratio of the primary particles of the shell, which is beneficial for improving the cycle performance, high-temperature storage performance, and rate capability of the battery.

In some embodiments, the x of the inner core is greater than the x of the shell; and optionally, the ratio of the x of the inner core to the x of the shell is greater than 1 and less than 2, for example, 1.1, 1.2, 1.3, 1.4, 1.5, 1.7, 1.8, 1.9, or a range formed by any of the foregoing values.

Therefore, it is beneficial for improving the electrochemical activity of the positive electrode material, reducing the difference in lithium concentration between the inner core and the shell during the charging and discharging process so as to improve the cycle performance of the battery, reducing the lattice deformation of the shell so as to protect the structure of the inner core, and reducing the corrosion of the electrolytic solution on the inner core and the occurrence of side reactions so as to improve the cycle performance, specific capacity, and high-temperature storage performance of the battery.

In some embodiments, the ratio of the average diameter of the inner core to the average thickness of the shell is 1:1 to 100:1, optionally 1:1 to 20:1, more optionally 3:1 to 10:1, for example, 1:1, 2:1, 3:1, 5:1, 7:1, 8:1, 10:1, 12:1, 15:1, 16:1, 17:1, 19:1, 20:1, 22:1, 25:1, 30:1, 40:1, 50:1, 60:1, 70:1, 80:1, 90:1, 100:1, or a range formed by any of the foregoing values.

Therefore, the cracking and detachment of the shell of the positive electrode material are reduced during the charging and discharging process, the corrosion of the electrolytic solution on the inner core is reduced, and the cycle performance, high-temperature storage performance, and energy density of the battery are improved.

In some embodiments, the positive electrode material includes a first coating layer coating the shell and a second coating layer coating the first coating layer, where the first coating layer coats the shell in an island shape, and/or the second coating layer continuously coats the first coating layer.

Therefore, the island-shaped coating of the first coating layer improves the adhesion between the primary particles of the shell, thereby improving the structural strength of the positive electrode material. The arrangement of two coating layers helps to increase the migration rate of lithium ions in the positive electrode material and the ion exchange rate between the positive electrode material and the electrolytic solution, and helps to reduce side reactions between the positive electrode material and the electrolytic solution, thereby prolonging the cycle life of the battery.

In some embodiments, the first coating layer and the second coating layer independently include one or more elements of Sr, B, Al, Ti, Zr, Nb, W, F, La, Ce, C, and Co, and optionally include one or more elements of B, Al, and Ti.

Therefore, the energy density, cycle life, and storage life of the battery are improved.

In some embodiments, Dv50 particle size of the positive electrode material is greater than or equal to 5 µm and less than or equal to 20 µm, optionally greater than 5 µm and less than or equal to 15 µm, for example, 5 µm, 7 µm, 9 µm, 10 µm, 12 µm, 14 µm, 15 µm, 17 µm, 18 µm, 20 µm, or a range formed by any of the foregoing values; and/or

Span of the positive electrode material is greater than or equal to 0.4 and less than or equal to 5, optionally greater than or equal to 0.5 and less than or equal to 2, for example, 0.4, 0.5, 0.7, 0.8, 1, 1.5, 2, 2.5, 3, 3.5, 4, 4.5, 5, or a range formed by any of the foregoing values, where
the Span of the positive electrode material = (Dv90 particle size - Dv10 particle size)/Dv50 particle size; and/or
BET specific surface area of the positive electrode material at the temperature of liquid nitrogen is 0.3 cm²/g to 1.5 cm²/g, optionally 0.36 cm²/g to 0.89 cm²/g, for example, 0.3 cm²/g, 0.5 cm²/g, 0.7 cm²/g, 0.8 cm²/g, 0.9 cm²/g, 1.0 cm²/g, 1.1 cm²/g, 1.2 cm²/g, 1.3 cm²/g, 1.4 cm²/g, 1.5 cm²/g, or a range formed by any of the foregoing values; and/or
the compaction density of the positive electrode material at 30MPa is 3.2 g/cm³ to 3.5 g/cm³, for example, 3.2 g/cm³, 3.3 g/cm³, 3.4 g/cm³, 3.5 g/cm³, or a range formed by any of the foregoing values.

The Dv50 particle size of the positive electrode material within the above range improves the compaction density and volumetric energy density of the positive electrode material, and reduces the material cracking during cycling, thereby improving the cycle life and the high-temperature storage performance of the battery.

The Span value of the positive electrode material within the above range increases the compaction density of the positive electrode material, thereby improving the energy density of the battery.

The BET of the positive electrode material within the above range increases the electrochemically active sites of the positive electrode material while inhibiting the side reactions between the positive electrode material and the electrolytic solution, thereby improving the energy density and cycle performance of the battery.

In some embodiments, the mass content of free lithium in the positive electrode material is less than 3000 ppm.

The mass content of free lithium in the positive electrode material within the above range lowers the risk of gelation during the processing of the electrode plate, improves the processability, reduces the side reactions between the positive electrode material and the electrolytic solution, and lowers the gas production volume caused by the side reactions.

In the present application, the aspect ratio of the primary particles of the inner core/shell is determined by using a conventional method in the art. For example, scanning is performed on the primary particles of the positive electrode material by using the SEM-EDS integrated instrument so as to determine the boundaries of the inner core and the shell, and then the aspect ratio of a plurality of primary particles of the inner core and the aspect ratio of a plurality of primary particles of the shell are separately observed by scanning electron microscope images. The above test is repeated on a plurality of primary particles of the positive electrode material, and the average value is taken as the aspect ratio of the primary particles of the inner core and the aspect ratio of the primary particles of the shell.

In the present application, the volume distribution particle sizes Dv10, Dv50, and Dv90 are determined by a conventional method in the art. For example, after a sample is completely dispersed, the sample is measured by using a laser particle size analyzer according to the GB/T19077-2016/ISO 13320:2009.

In the present application, the average diameter of the inner core and the average thickness of the shell are determined by a conventional method in the art. For example, surface scanning is performed on the primary particles of the positive electrode material by using the SEM-EDS integrated instrument so as to determine the boundary between the inner core and the shell; the distance from the core of the inner core to the boundary and the distance from the core of the inner core to the outermost edge of the shell are measured on a scanning electron microscope image; the measurement is performed for a plurality of times in random orientations; and then the above test is repeated on a plurality of primary particles of the positive electrode material. The average diameter of the inner core is twice the average value of the distances from the core of the inner core to the boundary, and the average thickness of the shell is the average value of the differences between the distance from the core of the inner core to the outermost edge of the shell and the distance from the core of the inner core to the boundary.

In the present application, the BET specific surface area is determined by using a conventional method in the art. For example, the test is performed by using a nitrogen adsorption specific surface area analysis test method, and the BET specific surface area is calculated by the BET method. The nitrogen adsorption specific surface area analysis test can be performed by using a specific surface and porosity analyzer, and reference can be made to GB/T 19587-2004 for the test procedures.

In the present application, the particle strength of the positive electrode material is determined by using a conventional method in the art. For example, a microhardness tester is used to select secondary particles of the positive electrode material, the particles are compressed by the movement of a probe equipped with a pressure sensor, and the particle strength is recorded.

In the present application, the compaction density of the positive electrode material is determined by using a conventional method in the art. For example, the positive electrode material is placed into a mold of a compaction density tester, and the tester automatically applies a certain pressure to the powder until the powder is compacted. The volume of the powder can be calculated based on the cross-sectional area of the grinding tool and the thickness of the powder at this point, and the compaction density of the powder material can be determined based on the formula: compaction density = mass/volume.

### [Method for Preparing Positive Electrode Material]

One embodiment of the present application provides a method for preparing a positive electrode material. The method includes:
adding a first solution to an alkali or a solution thereof for a reaction, at an addition rate of the first solution of 12 L/h to 29 L/h (for example, 12 L/h, 14 L/h, 16 L/h, 18 L/h, 20 L/h, 22 L/h, 24 L/h, 25 L/h, 26 L/h, 27 L/h, 28 L/h, 29 L/h, or a range formed by any of the foregoing values), to obtain a precursor 1, where the first solution includes a nickel source, a cobalt source, and a source of an M1 element;
adding a second solution to the precursor 1 and the alkali or the solution thereof for a reaction, at an addition rate of the second solution of 12 L/h to 25 L/h (the addition rate of the second solution is 12 to 25 L/h, for example, 12 L/h, 14 L/h, 16 L/h, 18 L/h, 20 L/h, 22 L/h, 24 L/h, 25 L/h, or a range formed by any of the foregoing values), to obtain a precursor 2, where the second solution includes the nickel source, the cobalt source, and the source of the M1 element; and
mixing the precursor 2, a lithium source, and a source of an M2 element, and sintering the mixture to obtain a sintered product, i.e., the positive electrode material.

Therefore, most of the primary particles in the inner core are distributed in the radial direction of the inner core, which is beneficial for improving the transmission and diffusion of lithium ions; most of the primary particles in the shell are not distributed in the radial direction of the inner core, which is beneficial for reducing the erosion of the electrolytic solution, reducing the material nonuniformity and local stress concentration caused by the deintercalation and intercalation of lithium ions during the charging and discharging process, and reducing the cracking and deactivation of the positive electrode material; on the whole, this is beneficial for improving the stress nonuniformity caused by lattice contraction and expansion of the positive electrode material during the charging and discharging process, so as to improve the particle strength of the material, thereby improving the cycle life, high-temperature storage performance, and energy density of the battery.

In some embodiments, the positive electrode material includes an inner core and a shell coating the inner core, the inner core and the shell each including primary particles, where most of the primary particles in the inner core are distributed in the radial direction of the inner core, and the distribution of most of the primary particles in the shell is different from the radial distribution of the inner core; and the inner core and the shell independently include Liₐ(NiₓCo_{y}M1_{(1-x-y)})_{1-b}M2_{b}O_{z}, where the M1 of the inner core and the shell independently includes one or two elements of Mn and Al, the M2 of the inner core and the shell independently includes one or more elements of Ti, Na, K, Zr, Sr, Sb, Mo, W, Nb, Y, Te, La, B, F, Cl, and P, the a of the inner core and the shell is independently greater than 0.9 and less than 1.2 (for example, 0.95, 1, 1.05, 1.1, 1.15, 1.18, or a range formed by any of the foregoing values), the x of the inner core and the shell is independently greater than or equal to 0.5 and less than 1 (for example, 0.5, 0.6, 0.7, 0.8, 0.9, 0.95, or a range formed by any of the foregoing values), the y of the inner core and the shell is independently greater than 0 and less than or equal to 0.2 (for example, 0.01, 0.02, 0.05, 0.07, 0.09, 0.1, 0.12, 0.14, 0.15, 0.17, 0.18, 0.2, or a range formed by any of the foregoing values), the 1-x-y of the inner core and the shell is independently greater than 0 and less than or equal to 0.50 (for example, 0.1, 0.2, 0.3, 0.4, 0.5, or a range formed by any of the foregoing values), the b of the inner core and the shell is independently greater than 0 and less than or equal to 0.02 (for example, 0.001, 0.003, 0.005, 0.007, 0.008, 0.009, 0.01, 0.012, 0.015, 0.016, 0.018, 0.019, or a range formed by any of the foregoing values), and the z of the inner core and the shell is independently greater than 1.8 and less than 2.2 (for example, 1.85, 1.9, 1.95, 2, 2.1, 2.15, or a range formed by any of the foregoing values).

In some embodiments, the method further includes the following steps:
mixing the sintered product with a first coating starting material, and sintering the mixture to obtain an intermediate product; and
mixing the intermediate product with a second coating starting material, and sintering the mixture to obtain the positive electrode material including two coating layers, where
the positive electrode material includes an inner core, a shell coating the inner core, a first coating layer coating the shell, and a second coating layer coating the first coating layer, the inner core and the shell each including primary particles, where most of the primary particles in the inner core are distributed in the radial direction of the inner core, and the distribution of most of the primary particles in the shell is different from the radial distribution of the inner core; and the inner core and the shell include Liₐ(NiₓCo_{y}M1_{(1-x-y})_{1-b}M2_{b}O_{z}, and the first coating layer and the second coating layer independently include one or more elements of Sr, B, Al, Ti, Zr, Nb, W, F, La, Ce, C, and Co, optionally one or more elements of Sr, B, Al, Zr, Nb, W, F, La, Ce, C, and Co, where the M1 of the inner core and the shell independently includes one or two elements of Mn and Al, the M2 of the inner core and the shell independently includes one or more elements of Ti, Na, K, Zr, Sr, Sb, Mo, W, Nb, Y, Te, La, B, F, Cl, and P, the a of the inner core and the shell is independently greater than 0.9 and less than 1.2 (for example, 0.95, 1, 1.05, 1.1, 1.15, 1.18, or a range formed by any of the foregoing values), the x of the inner core and the shell is independently greater than or equal to 0.5 and less than 1 (for example, 0.5, 0.6, 0.7, 0.8, 0.9, 0.95, or a range formed by any of the foregoing values), the y of the inner core and the shell is independently greater than 0 and less than or equal to 0.2 (for example, 0.01, 0.02, 0.05, 0.07, 0.09, 0.1, 0.12, 0.14, 0.15, 0.17, 0.18, 0.2, or a range formed by any of the foregoing values), the 1-x-y of the inner core and the shell is independently greater than 0 and less than or equal to 0.50 (for example, 0.1, 0.2, 0.3, 0.4, 0.5, or a range formed by any of the foregoing values), the b of the inner core and the shell is independently greater than 0 and less than or equal to 0.02 (for example, 0.001, 0.003, 0.005, 0.007, 0.008, 0.009, 0.01, 0.012, 0.015, 0.016, 0.018, 0.019, or a range formed by any of the foregoing values), and the z of the inner core and the shell is independently greater than 1.8 and less than 2.2 (for example, 1.85, 1.9, 1.95, 2, 2.1, 2.15, or a range formed by any of the foregoing values).

In some embodiments, in the step of preparing the precursor 2, after the reaction, a reaction product is subjected to aging to obtain the precursor 2.

In some embodiments, in the step of preparing the precursor 2, the temperature of the aging is 30 °C to 80 °C, for example, 30 °C, 40 °C, 50 °C, 60 °C, 70 °C, 80 °C, or a range formed by any of the foregoing values.

In some embodiments, in the step of preparing the precursor 2, the duration of the aging is 5 h to 24 h, for example, 5 h, 6 h, 7 h, 8 h, 9 h, 10 h, 12 h, 14 h, 15 h, 16 h, 17 h, 19 h, 20 h, 21 h, 22 h, 23 h, 24 h, or a range formed by any of the foregoing values.

In some embodiments, in the steps of preparing the precursor 1 and the precursor 2, the temperature of the reaction is independently 40 °C to 80 °C, for example, 40 °C, 50 °C, 60 °C, 70 °C, 80 °C, or a range formed by any of the foregoing values.

In some embodiments, in the steps of preparing the precursor 1 and the precursor 2, the reaction is performed in an inert gas atmosphere.

In some embodiments, in the steps of preparing the precursor 1 and the precursor 2, the reaction is performed at a pH value of 9 to 12 (for example, 9, 9.5, 10, 10.5, 11, 11.5, 12, or a range formed by any of the foregoing values).

In some embodiments, in the step of preparing the precursor 2, after the reaction or aging, the reaction product is washed and dried; and optionally, the temperature of the drying is 100 °C to 180 °C, for example, 100 °C, 120 °C, 140 °C, 150 °C, 170 °C, 180 °C, or a range formed by any of the foregoing values, and optionally, and the duration of the drying is 5h to 15 h, for example, 5 h, 6 h, 7 h, 8 h, 9 h, 10 h, 11 h, 13 h, 15 h, or a range formed by any of the foregoing values.

In some embodiments, in the step of preparing the sintered product, the temperature of the sintering is 750 °C to 950 °C, for example, 750 °C, 800 °C, 850 °C, 900 °C, 950 °C, or a range formed by any of the foregoing values.

In some embodiments, in the step of preparing the sintered product, the duration of the sintering is 10 h to 30 h, for example, 10 h, 15 h, 20 h, 25 h, 30 h, or a range formed by any of the foregoing values.

In some embodiments, in the step of preparing the sintered product, the sintering is performed in an oxygen-containing atmosphere.

In some embodiments, in the steps of preparing the intermediate product and the positive electrode material including two coating layers, the temperature of the sintering is independently 250 °C to 700 °C, for example, 250 °C, 300 °C, 350 °C, 400 °C, 450 °C, 500 °C, 550 °C, 600 °C, 650 °C, 700 °C, or a range formed by any of the foregoing values.

In some embodiments, in the steps of preparing the intermediate product and the positive electrode material including two coating layers, the duration of the sintering is independently 5 h to 20 h, for example, 5 h, 6 h, 7 h, 8 h, 9 h, 10 h, 12 h, 14 h, 15 h, 16 h, 17 h, 18 h, 19 h, 20 h, or a range formed by any of the foregoing values.

In some embodiments, in the steps of preparing the intermediate product and the positive electrode material including two coating layers, the sintering is performed in an oxygen-containing atmosphere.

In some embodiments, the Dv50 particle size of the precursor 1 is 4.3 µm to 17.3 µm, for example, 4.3 µm, 5 µm, 6 µm, 7 µm, 8 µm, 9 µm, 10 µm, 12 µm, 14 µm, 15 µm, 16 µm, 17.3 µm, or a range formed by any of the foregoing values.

In some embodiments, the Dv50 particle size of the precursor 2 is 5 µm to 20 µm, for example, 5 µm, 6 µm, 7 µm, 8 µm, 9 µm, 10 µm, 12 µm, 14 µm, 15 µm, 16 µm, 17 µm, 18 µm, 19 µm, 20 µm, or a range formed by any of the foregoing values.

In some embodiments, in the first solution and the second solution, the molar percentage of the nickel element in the total metal element is independently greater than 0.5 and less than 1.

In some embodiments, in the first solution and the second solution, the molar percentage of the cobalt element in the total metal element is independently greater than 0 and less than 0.2, for example, 0.01, 0.05, 0.08, 0.1, 0.12, 0.14, 0.15, 0.18, 0.19, or a range formed by any of the foregoing values.

In some embodiments, the molar ratio of the precursor 2 to the lithium element in the lithium source is 5:6 to 10:9, for example, 5:6, 1:1.06, 1:1, 1.05:1, 10:9, or a range formed by any of the foregoing values.

In some embodiments, the molar ratio of the lithium element in the lithium source to the M2 element in the source of the M2 element is a:b, where the a is greater than 0.9 and less than 1.2, for example, 0.95, 1, 1.05, 1.1, 1.15, 1.18, or a range formed by any of the foregoing values, and the b is greater than 0 and less than or equal to 0.02, for example, 0.001, 0.003, 0.005, 0.007, 0.008, 0.009, 0.01, 0.012, 0.015, 0.016, 0.018, 0.02, or a range formed by any of the foregoing values.

In some embodiments, the mass ratio of the first coating starting material to the sintered product is greater than 0 and less than or equal to 1%, optionally greater than 0 and less than or equal to 0.5%, for example, 0.1%, 0.2%, 0.3%, 0.4%, 0.5%, 0.6%, 0.7%, 0.8%, 0.9%, 1%, or a range formed by any of the foregoing values.

In some embodiments, the mass ratio of the second coating starting material to the intermediate product is greater than 0 and less than or equal to 1%, optionally greater than 0 and less than or equal to 0.5%, for example, 0.1%, 0.2%, 0.3%, 0.4%, 0.5%, 0.6%, 0.7%, 0.8%, 0.9%, 1%, or a range formed by any of the foregoing values.

### [Positive Electrode Plate]

A positive electrode plate generally includes a positive electrode current collector and a positive electrode film layer disposed on at least one surface of the positive electrode current collector, and the positive electrode film layer includes a positive electrode active material.

The battery, during the charging and discharging process, undergoes deintercalation and consumption of Li, and the molar content of Li varies when the battery is discharged to different states. In the enumeration related to the positive electrode material in the present application, the molar content of Li is in an initial state of the material, i.e., a state before the material is added, and when the positive electrode material is applied to a battery system, the molar content of Li varies after charging and discharging cycles.

In the enumeration related to the positive electrode material in the present application, the molar content of O is only a theoretical value. The molar content of oxygen varies due to oxygen release from the lattice, and actually, the molar content of O fluctuates.

As an example, the positive electrode current collector has two surfaces opposite to each other in its own thickness direction, and the positive electrode film layer is disposed on any one or both of the two opposite surfaces of the positive electrode current collector.

In some embodiments, a metal foil or a composite current collector may be used as the positive electrode current collector. For example, as the metal foil, an aluminum foil may be used. The composite current collector may include a polymer material base layer and a metal layer formed on at least one surface of the polymer material base layer. The composite current collector may be formed by forming a metal material (aluminum, aluminum alloy, nickel, nickel alloy, titanium, titanium alloy, silver, silver alloy, or the like) on a polymer material substrate (such as a substrate made of polypropylene (PP), polyethylene terephthalate (PET), polybutylene terephthalate (PBT), polystyrene (PS), and polyethylene (PE)).

In some embodiments, a positive electrode material commonly known in the art for use in batteries may be further added to the positive electrode material. As an example, the positive electrode material may include at least one of the following materials: a lithium-containing phosphate with an olivine structure, a lithium transition metal oxide, and respective modified compounds thereof. However, the present application is not limited to these materials, and other conventional materials that can be used as positive electrode active materials for batteries may also be used. These positive electrode active materials may be used alone or in combination of two or more. Examples of the lithium transition metal oxide may include, but are not limited to, at least one of a lithium cobalt oxide (such as LiCoO₂), a lithium nickel oxide (such as LiNiO₂), a lithium manganese oxide (such as LiMnO₂ or LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁)), a lithium nickel cobalt aluminum oxide (such as LiNi_{0.85}Co_{0.15}Al_{0.05}O₂), and modified compounds thereof. Examples of the lithium-containing phosphate with an olivine structure may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon.

In some embodiments, the positive electrode film layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylic resin.

In some embodiments, the positive electrode film layer further optionally includes a conductive agent. As an example, the conductive agent may include at least one of superconducting carbon, acetylene black, carbon black, Ketjen black, a carbon dot, a carbon nanotube, graphene, and a carbon nanofiber.

In some embodiments, the positive electrode plate can be prepared in the following manner: dispersing the components described above for preparing the positive electrode plate, such as the positive electrode active material, the conductive agent, the binder, and any other components, in a solvent (such as N-methylpyrrolidone) to form a positive electrode slurry; and coating the positive electrode current collector with the positive electrode slurry, and performing drying, cold pressing, and other processes, such that the positive electrode plate can be obtained.

### [Negative Electrode Plate]

The negative electrode plate includes a negative electrode current collector and a negative electrode film layer disposed on at least one surface of the negative electrode current collector, and the negative electrode film layer includes a negative electrode active material.

As an example, the negative electrode current collector has two surfaces opposite to each other in its own thickness direction, and the negative electrode film layer is disposed on any one or both of the two opposite surfaces of the negative electrode current collector.

In some embodiments, a metal foil or a composite current collector may be used as the negative electrode current collector. For example, as the metal foil, a copper foil may be used. The composite current collector may include a polymer material base layer and a metal layer formed on at least one surface of the polymer material substrate. The composite current collector may be formed by forming a metal material (copper, copper alloy, nickel, nickel alloy, titanium, titanium alloy, silver, silver alloy, and the like) on a polymer material substrate (such as a substrate made of polypropylene (PP), polyethylene terephthalate (PET), polybutylene terephthalate (PBT), polystyrene (PS), and polyethylene (PE)).

In some embodiments, a negative electrode active material for use in batteries well known in the art may be used as the negative electrode active material. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as negative electrode active materials for batteries may also be used. These negative electrode active materials may be used alone or in combination of two or more.

In some embodiments, the negative electrode film layer further optionally includes a binder. As an example, the binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. As an example, the conductive agent may be selected from at least one of superconducting carbon, acetylene black, carbon black, Ketjen black, a carbon dot, a carbon nanotube, graphene, and a carbon nanofiber.

In some embodiments, the negative electrode film layer further optionally includes other auxiliary agents, such as a thickener (e.g., sodium carboxymethylcellulose (CMC-Na)).

In some embodiments, the negative electrode plate can be prepared in the following manner: dispersing the components described above for preparing the negative electrode plate, such as the negative electrode active material, the conductive agent, the binder, and any other components, in a solvent (such as deionized water) to form a negative electrode slurry; and coating the negative electrode current collector with the negative electrode slurry, and performing drying, cold pressing, and other processes, such that the negative electrode plate can be obtained.

### [Electrolyte]

The electrolyte conducts ions between the positive electrode plate and the negative electrode plate. The present application does not specifically limit the type of the electrolyte, which can be selected according to requirements. For example, the electrolyte may be liquid, gel, or all solid.

In some embodiments, the electrolyte is liquid and includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolytic solution further optionally includes an additive. As an example, the additive may include a negative electrode film-forming additive, a positive electrode film-forming additive, and may also include an additive capable of improving certain performance of the battery, such as an additive for improving the overcharge performance of the battery, an additive for improving the high- or low-temperature performance of the battery, or the like.

### [Separator]

In some embodiments, the battery cell further includes a separator. The present application does not particularly limit the type of the separator, and any porous-structure separator known to have good chemical stability and mechanical stability may be selected.

In some embodiments, the separator may be made of a material selected from at least one of glass fiber, non-woven fabric, polyethylene, polypropylene, and polyvinylidene fluoride. The separator may be a single-layer film or a multi-layer composite film, which is not specified. When the separator is a multi-layer composite film, the materials of the layers may be the same or different, which is not specified.

In some embodiments, the positive electrode plate, the negative electrode plate, and the separator may be manufactured into an electrode assembly through a winding process or a stacking process.

In some embodiments, the battery cell may include an outer packaging. The outer packaging may be configured to package the electrode assembly and electrolyte described above.

In some embodiments, the outer packaging of the battery cell may be a hard shell, such as a hard plastic shell, an aluminum shell, or a steel shell. The outer packaging of the battery cell may also be a soft pack, such as a pouch-type soft pack. The soft pack may be made of plastic, and examples of the plastic may include polypropylene, polybutylene terephthalate, polybutylene succinate, and the like.

The present application does not particularly limit the shape of the battery cell, and it may have a cylindrical shape, a prismatic shape, or any other shape. For example, FIG. 2 shows a battery cell 5 having a prismatic structure as one example.

In some embodiments, referring to FIG. 3, the outer packaging may include a housing 51 and a cover plate 53. The housing 51 may include a bottom plate and side plates connected to the bottom plate, and the bottom plate and the side plates define, in an enclosing manner, an accommodating cavity. The housing 51 is provided with an opening communicating with the accommodating cavity, and the cover plate 53 is capable of lidding the opening to close the accommodating cavity. The positive electrode plate, the negative electrode plate, and the separator may be subjected to a winding process or a stacking process to form an electrode assembly 52. The electrode assembly 52 is packaged in the accommodating cavity. The electrolytic solution infiltrates into the electrode assembly 52. The number of the electrode assembly 52 included in the battery cell 5 may be one or more, and those skilled in the art can select the number according to specific and actual requirements.

In some embodiments, the battery cell may be assembled into a battery module. The number of battery cells included in the battery module may be one or more, and the specific number may be selected by those skilled in the art based on the use and capacity of the battery module.

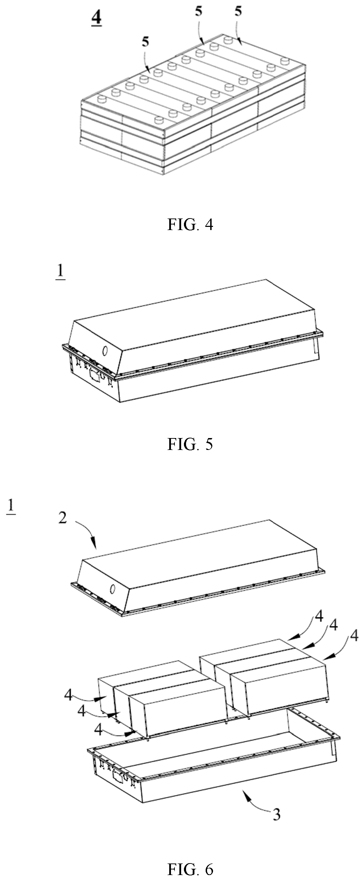

FIG. 4 shows a battery module 4 as one example. Referring to FIG. 4, in the battery module 4, a plurality of battery cells 5 may be sequentially arranged in the length direction of the battery module 4. Certainly, the arrangement may also be in any other manner. Further, the plurality of battery cells 5 may be fixed by fasteners.

Optionally, the battery module 4 may further include a shell having an accommodating space in which the plurality of battery cells 5 are accommodated.

In some embodiments, the battery module described above may also be assembled into a battery pack. The number of battery modules included in the battery pack may be one or more, and the specific number may be selected by those skilled in the art based on the use and capacity of the battery pack.

FIGs. 5 and 6 show a battery pack 1 as one example. Referring to FIGs. 5 and 6, the battery pack 1 may include a battery case and a plurality of battery modules 4 disposed in the battery case. The battery case includes an upper case body 2 and a lower case body 3. The upper case body 2 is capable of lidding the lower case body 3 to form a closed space for accommodating the battery modules 4. The plurality of battery modules 4 may be arranged in any manner in the battery case.

Additionally, the present application further provides an electric device. The electric device includes at least one of the battery cell, the battery module, or the battery pack according to the present application. The battery cell, the battery module, or the battery pack can be used as a power source for the electric device, and they can also be used as an energy storage unit for the electric device. The electric device may include, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, a ship, or a satellite, an energy storage system, or the like.

As for the electric device, a battery cell, a battery module, or a battery pack may be selected according to usage requirements thereof.

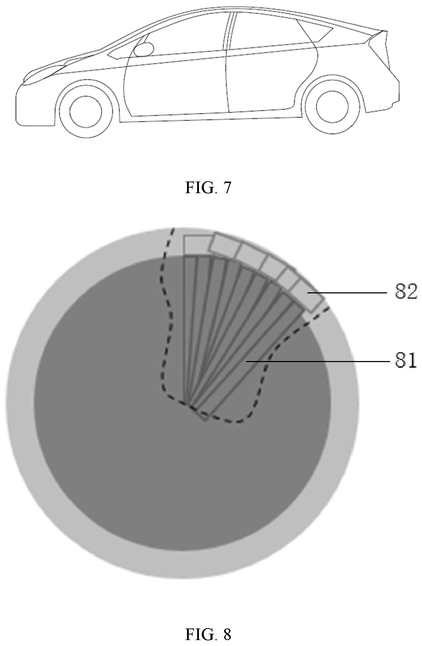

FIG. 7 shows an electric device as one example. The electric device is a pure electric vehicle, a hybrid electric vehicle, a plug-in hybrid electric vehicle, or the like. To meet the requirements of the electric device for high power and high energy density of the battery cell, the battery pack or the battery module may be used.

### [Examples]

Hereinafter, examples of the present application are described. The examples described below are illustrative and merely used to explain the present application, and they should not be construed as limiting the present application. The examples without techniques or conditions specified therein are implemented according to techniques or conditions described in the literature in the art or according to product instructions. Reagents or instruments used herein without specified manufacturers are all commercially available conventional products.

### Example 1

### (1) Preparation of positive electrode material:

Nickel sulfate, cobalt sulfate, and manganese sulfate were dissolved in deionized water at a molar ratio of 8:1:1 to obtain a first solution with a total concentration of 1 mol/L.

Nickel sulfate, cobalt sulfate, and manganese sulfate were dissolved in deionized water at a molar ratio of 6:2:2 to obtain a second solution with a total concentration of 1 mol/L.

The concentration of ammonium hydroxide was 5 g/L.
① In a nitrogen atmosphere, the first solution and sodium hydroxide were introduced into a 500 L reaction kettle. The temperature of the reaction kettle was controlled to be 60 °C, the rotation speed was maintained at 200 to 300 rpm, the flow rate of the first solution was maintained at 15 L/h to 25 L/h, and the pH value of the reaction system was maintained at 11. As particle size increased, the flow rate of the first solution was controlled to gradually decrease, and meanwhile, ammonium hydroxide was introduced to maintain the ammonia concentration in the kettle at 5 g/L, thereby obtaining precursor 1 with a Dv50 particle size of 8 µm, i.e., Ni_{0.8}Co_{0.1}Mn_{0.1}(OH)₂.
② With other conditions maintained the same as those in step ①, the second solution was introduced at a controlled flow rate of 12 L/h to 16 L/h to allow continued growth. The mixture was aged at 60 °C for another 10 h, and filtered, and the filter residue was washed and dried at 100 °C for 15 h to obtain precursor 2 with a Dv50 particle size of 10 µm, i.e., Ni_{0.6}Co_{0.2}Mn_{0.2}(OH)₂ coated with Ni_{0.8}Co_{0.1}Mn_{0.1}(OH)₂.
③ Precursor 2, LiOH·H₂O, and ZrO₂ were mixed in a blender at a molar ratio of 0.99:1.00:0.01 and sintered at 800 °C for 18 h in an oxygen atmosphere.
④ The sintered product was mixed with aluminum oxide at a molar ratio of 1:0.01, and then sintered at 500 °C for 10 h in an oxygen atmosphere to obtain a positive electrode material.

In the positive electrode material, the distribution directions of the primary particles of the inner core and the primary particles of the shell can be observed by using a scanning electron microscope. A schematic diagram showing the distribution directions of primary particles 81 of the inner core and primary particles 82 of the shell is shown in FIG. 8.

### (2) Preparation of positive electrode plate:

The positive electrode material, polyvinylidene fluoride, and conductive carbon black were mixed at a mass ratio of 90:5:5, and then N-methylpyrrolidone (NMP) was added. The mixture was stirred for 2 h, then stirred in a homogenizer at 1000 r/min until the mixture was uniformly mixed, and then uniformly applied to the surfaces on both sides of a 13 µm-thick aluminum foil current collector. After the application, the current collector was dried in a drying oven at 100 °C, cold-pressed, and slit to obtain a positive electrode plate.

### (3) Preparation of electrolytic solution:

Ethylene carbonate (EC) and diethyl carbonate (DEC) were mixed at a volume ratio of 1:2 to obtain a mixed solvent. Then, in an argon-atmosphere glove box, the fully dried lithium hexafluorophosphate was dissolved in a mixed solvent and uniformly mixed to obtain an electrolytic solution. The concentration of lithium salt in the electrolytic solution was 1 mol/L.

### (4) Preparation of negative electrode plate:

Graphite as a negative electrode active material, sodium carboxymethylcellulose, styrene-butadiene rubber, and acetylene black were mixed at a mass ratio of 96:1:1:2, and deionized water was added. The mixture was uniformly stirred in a mixer. Then, the slurry was applied to the surfaces on both sides of an 8 µm-thick copper foil, and the copper foil was dried in an oven at 100 °C, cold-pressed, and slit to obtain a negative electrode plate.

### (5) Separator: A polypropylene film was used.

### (6) Preparation of secondary battery:

The positive electrode plate, the separator, and the negative electrode plate described above were stacked in sequence and wound to obtain an electrode assembly. The electrode assembly was put into an outer packaging, the prepared electrolytic solution was added, and packaging, standing, formation, aging, and other processes were conducted to obtain a secondary battery.

The preparation methods and products of Examples 2 to 20 and Comparative Examples 1 to 3 are similar to those of Example 1, with different process parameters and product parameters shown in Tables 1 to 3.

**Table 1 Parameters of Steps ① to ② in Preparation Methods of Examples 1 to 20 and Comparative Examples 1 to 3**

| | Step (1) | | | | | | Step ② | | | | | | |
|---|---|---|---|---|---|---|---|---|---|---|---|---|---|
| | Molar ratio of Ni to the total transition metal element in the first solution | Molar ratio of Co to the total transition metal element in the first solution | Reaction temperature | Flow rate of the first solution (L/h) | Dv50 of precursor 1 (µm) | Reaction pH value | Molar ratio of Ni to the total transition metal element in the second solution | Molar ratio of Co to the total transition metal element in the second solution | Reaction temperature | Dv50 of precursor 2 (µm) | Flow rate of the second solution (L/h) | Reaction pH value | Temperature and time of aging |
| Example 1 | 80% | 10% | 60 °C | 15-25 | 8 | 11 | 60% | 20% | 60 °C | 10 | 12-16 | 11 | 60 °C, 10h |
| Example 2 | 80% | 10% | 60 °C | 15-25 | 8 | 11 | 50% | 20% | 60 °C | 10 | 12-16 | 11 | 60 °C, 10h |
| Example 3 | 90% | 5% | 60 °C | 15-25 | 8 | 11 | 60% | 20% | 60 °C | 10 | 12-16 | 11 | 60 °C, 10h |
| Example 4 | 80% | 10% | 60 °C | 15-25 | 8 | 11 | 60% | 20% | 60 °C | 10 | 12-16 | 11 | 60 °C, 10h |
| Example 5 | 80% | 10% | 60 °C | 18-28 | 8 | 11 | 60% | 20% | 60 °C | 10 | 12-16 | 11 | 60 °C, 10h |
| Example 6 | 80% | 10% | 60 °C | 14-23 | 8 | 11 | 60% | 20% | 60 °C | 10 | 12-16 | 11 | 60 °C, 10h |
| Example 7 | 80% | 10% | 60 °C | 15-25 | 10 | 11 | 60% | 20% | 60 °C | 10.5 | 12-16 | 11 | 60 °C, 10h |
| Example 8 | 80% | 10% | 60 °C | 15-25 | 5 | 11 | 60% | 20% | 60 °C | 10 | 12-16 | 11 | 60 °C, 10h |
| Example 9 | 80% | 10% | 60 °C | 16-26 | 8.3 | 11 | 60% | 20% | 60 °C | 9.6 | 13-17 | 11 | 60 °C, 10h |
| Example 10 | 80% | 10% | 60 °C | 16-26 | 10 | 11 | 60% | 20% | 60 °C | 11.5 | 13-17 | 11 | 60 °C, 10h |
| Example 11 | 80% | 10% | 60 °C | 15-25 | 8 | 10.5 | 60% | 20% | 60 °C | 10 | 12-16 | 11 | 60 °C, 10h |
| Example 12 | 80% | 10% | 60 °C | 15-25 | 8 | 11.5 | 60% | 20% | 60 °C | 10 | 12-16 | 11 | 60 °C, 10h |
| Example 13 | 80% | 10% | 60 °C | 19-29 | 8 | 11 | 60% | 20% | 60 °C | 10 | 12-16 | 11 | 60 °C, 10h |
| Example 14 | 80% | 10% | 60 °C | 12-16 | 8 | 11 | 60% | 20% | 60 °C | 10 | 15-25 | 11 | 60 °C, 10h |
| Example 15 | 80% | 10% | 60 °C | 16-26 | 9.7 | 11 | 60% | 20% | 60 °C | 9.8 | 15-25 | 11 | 60 °C, 10h |
| Example 16 | 80% | 10% | 60 °C | 16-26 | 4.3 | 11 | 60% | 20% | 60 °C | 5 | 13-17 | 11 | 60 °C, 10h |
| Example 17 | 80% | 10% | 60 °C | 16-26 | 17.3 | 11 | 60% | 20% | 60 °C | 20 | 13-17 | 11 | 60 °C, 10h |
| Example 18 | 80% | 10% | 60 °C | 16-26 | 8.5 | 11 | 60% | 20% | 60 °C | 9.8 | 13-17 | 11 | 60 °C, 10h |
| Example 19 | 80% | 10% | 60 °C | 16-26 | 8.5 | 11.8 | 60% | 20% | 60 °C | 9.8 | 13-17 | 11 | 60 °C, 10h |
| Example 20 | 60% | 20% | 60 °C | 15-25 | 8 | 11 | 80% | 10% | 60 °C | 10 | 12-16 | 11 | 60 °C, 10h |
| Comparative Example 1 | 80% | 10% | 60 °C | 7-8 | 8 | 10 | 60% | 20% | 60 °C | 10 | 12-16 | 11 | 60 °C, 10h |
| Comparative Example 2 | 80% | 10% | 60 °C | 7-8 | 8 | 10 | 60% | 20% | 60 °C | 10 | 15-25 | 11 | 60 °C, 10h |
| Comparative Example 3 | 80% | 10% | 60 °C | 16-26 | 8.5 | 11 | 60% | 20% | 60 °C | 9.8 | 13-17 | 11 | 60 °C, 10h |

**Table 2 Parameters of Steps ③ to ⑤ in Preparation Methods of Examples 1 to 20 and Comparative Examples 1 to 3**

| | Step ③ | | | | Step ④ | | | Step ⑤ | | |
|---|---|---|---|---|---|---|---|---|---|---|
| | Molar ratio of precursor 2 to lithium element in the lithium source | M2 source and molar ratio | Molar ratio of lithium element to M2 element | Temperature and time of sintering | First coating starting material | Mass ratio of the sintered product to the first coating starting material | Temperature and time of sintering | Second coating starting material | Mass ratio of intermediate product to the second coating starting material | Temperature and time of sintering |
| Example 1 | 1:1.06 | ZrO2 | 1:0.01 | 800 °C, 18h | Aluminum oxide | 100: 0.5 | 400 °C, 8h | Boric acid | 100:0.5 | 400 °C, 8h |
| Example 2 | 1:1.06 | ZrO2 | 1:0.01 | 800 °C, 18h | Aluminum oxide | 100:0.5 | 400 °C, 8h | Boric acid | 100:0.5 | 400 °C, 8h |
| Example 3 | 1:1.06 | ZrO2 | 1:0.01 | 780 °C, 18h | Aluminum oxide | 100:0.5 | 400 °C, 8h | Boric acid | 100:0.5 | 400 °C, 8h |
| Example 4 | 1:1.06 | Molar ratio of ZrO2 to Y2O3: 2:1 | 1:0.02 | 800 °C, 18h | Aluminum oxide | 100:0.5 | 400 °C, 8h | Boric acid | 100:0.5 | 400 °C, 8h |
| Example 5 | 1:1.06 | ZrO2 | 1:0.01 | 800 °C, 18h | Aluminum oxide | 100:0.5 | 400 °C, 8h | Boric acid | 100:0.5 | 400 °C, 8h |
| Example 6 | 1:1.06 | ZrO2 | 1:0.01 | 800 °C, 18h | Aluminum oxide | 100:0.5 | 400 °C, 8h | Boric acid | 100:0.5 | 400 °C, 8h |
| Example 7 | 1:1.06 | ZrO2 | 1:0.01 | 800 °C, 18h | Aluminum oxide | 100:0.5 | 400 °C, 8h | Boric acid | 100:0.5 | 400 °C, 8h |
| Example 8 | 1:1.06 | ZrO2 | 1:0.01 | 800 °C, 18h | Aluminum oxide | 100:0.5 | 400 °C, 8h | Boric acid | 100:0.5 | 400 °C, 8h |
| Example 9 | 1:1.06 | ZrO2 | 1:0.01 | 800 °C, 18h | Titanium oxide | 100:0.5 | 400 °C, 8h | Aluminum oxide, boric acid | 100:0.5 | 400 °C, 8h |
| Example 10 | 1:1.06 | ZrO2 | 1:0.01 | 800 °C, 18h | Titanium oxide | 100:0.5 | 400 °C, 8h | Aluminum oxide, boric acid | 100:0.5 | 400 °C, 8h |
| Example 11 | 1:1.06 | ZrO2 | 1:0.01 | 800 °C, 18h | Aluminum oxide | 100:0.5 | 400 °C, 8h | Boric acid | 100:0.5 | 400 °C, 8h |
| Example 12 | 1:1.06 | ZrO2 | 1:0.01 | 800 °C, 18h | Aluminum oxide | 100:0.5 | 400 °C, 8h | Boric acid | 100:0.5 | 400 °C, 8h |
| Example 13 | 1:1.06 | ZrO2 | 1:0.01 | 800 °C, 18h | Aluminum oxide | 100:0.5 | 400 °C, 8h | Boric acid | 100:0.5 | 400 °C, 8h |
| Example 14 | 1:1.06 | ZrO2 | 1:0.01 | 800 °C, 18h | Titanium oxide | 100:0.5 | 400 °C, 8h | Titanium oxide | 100:0.5 | 400 °C, 8h |
| Example 15 | 1:1.06 | ZrO2 | 1:0.01 | 800 °C, 18h | Titanium oxide | 100:0.5 | 400 °C, 8h | Titanium oxide | 100:0.5 | 400 °C, 8h |
| Example 16 | 1:1.06 | ZrO2 | 1:0.01 | 800 °C, 18h | Titanium oxide | 100:0.5 | 400 °C, 8h | Aluminum oxide, boric acid | 100:0.5 | 400 °C, 8h |
| Example 17 | 1:1.06 | ZrO2 | 1:0.01 | 800 °C, 18h | Titanium oxide | 100:0.5 | 400 °C, 8h | Aluminum oxide, boric acid | 100:0.5 | 400 °C, 8h |
| Example 18 | 1:1.06 | ZrO2 | 1:0.01 | 800 °C, 18h | Titanium oxide | 100:0.5 | 400 °C, 8h | Titanium oxide, boric acid | 100:0.5 | 400 °C, 8h |
| Example 19 | 1:1.06 | ZrO2 | 1:0.01 | 800 °C, 18h | Titanium oxide | 100:0.5 | 400 °C, 8h | Titanium oxide, boric acid | 100:0.5 | 400 °C, 8h |
| Example 20 | 1:1.06 | ZrO2 | 1:0.01 | 800 °C, 18h | Aluminum oxide | 100:0.5 | 400 °C, 8h | Boric acid | 100:0.5 | 400 °C, 8h |
| Comparative Example 1 | 1:1.06 | ZrO2 | 1:0.01 | 800 °C, 18h | Aluminum oxide | 100:0.5 | 400 °C, 8h | Boric acid | 100:0.5 | 400 °C, 8h |
| Comparative Example 2 | 1:1.06 | ZrO2 | 1:0.01 | 800 °C, 18h | Aluminum oxide | 100:0.5 | 400 °C, 8h | Boric acid | 100:0.5 | 400 °C, 8h |
| Comparative Example 3 | 1:1.06 | / | / | 800 °C, 18h | / | / | / | / | / | / |

**Table 3. Parameter Results of Positive Electrode Materials for Examples 1 to 20 and Comparative Examples 1 to 3**

| | Composition of positive electrode material | | | | Inner core x/Shell x | Aspect ratio of primary particles in inner core | Aspect ratio of primary particles in shell | Primary particles of inner core distributed in the radial direction of the inner core or not | Primary particles of shell distributed in the radial direction of the inner core or not | Average diameter of inner core/ Average thickness of shell | Dv50 of positive electrode material (µm) | Span of positive electrode material | BET of positive electrode material (cm²/g) | Particle strength of positive electrode material | Compaction density (g/cm³) |
|---|---|---|---|---|---|---|---|---|---|---|---|---|---|---|---|
| | Chemical formula of inner core | Chemical formula of shell | Shape and element of first coating layer | Shape and element of second coating layer | | | | | | | | | | | |
| Example 1 | Li(Ni_{0.8}Co_{0.1} Mn_{0.1})_{0.99} Zr_{0.01}O₂ | Li(Ni_{0.6}Co_{0 .2}Mn_{0.2})_{0.99} Zr_{0.01}O₂ | Island-shaped, Al | Layered, B | 1.33 | 2 | 1.5 | Yes | No | 8:2 | 10 | 1.3 | 0.55 | 90 | 3.4 |
| Example 2 | Li(Ni_{0.8}Co_{0.1}Mn_{0.1})_{0.99} Zr_{0.01}O₂ | Li(Ni_{0.5}Co_{0. 2}Mn_{0.3})_{0.99} Zr_{0.01}O₂ | Island-shaped, Al | Layered, B | 1.60 | 2 | 1.5 | Yes | No | 8:2 | 10 | 1.3 | 0.55 | 95 | 3.4 |
| Example 3 | Li(Ni_{0.9}Co_{0.05}Mn_{0.05})_{0.99} Zr_{0.01}O₂ | Li(Ni_{0.6}Co_{0 .2}Mn_{0.2})_{0.99} Zr_{0.01}O₂ | Island-shaped, Al | Layered, B | 1.50 | 2 | 1.5 | Yes | No | 8:2 | 10 | 1.3 | 0.55 | 85 | 3.4 |
| Example 4 | Li(Ni_{0.8}Co_{0 .1}Mn_{0.1})_{0.98} Zr_{0.01}Y_{0.01} O₂ | Li(Ni_{0.6}Co_{0 .2}Mn_{0.2})_{0.98} Zr_{0.01}Y_{0.01} O₂ | Island-shaped, Al | Layered, B | 1.33 | 2 | 1.5 | Yes | No | 8:2 | 10 | 1.3 | 0.55 | 94 | 3.4 |
| Example 5 | Li(Ni_{0.8}Co_{0 .1}Mn_{0.1})_{0.99} Zr_{0.01}O₂ | Li(Ni_{0.6}Co_{0 .2}Mn_{0.2})_{0.99} Zr_{0.01}O₂ | Island-shaped, Al | Layered, B | 1.33 | 5 | 1.5 | Yes | No | 8:2 | 10 | 1.3 | 0.55 | 95 | 3.4 |
| Example 6 | Li(Ni_{0.8}Co_{0 .1}Mn_{0.1})_{0.99} Zr_{0.01}O₂ | Li(Ni_{0.6}Co_{0 .2}Mn_{0.2})_{0.99} Zr_{0.01}O₂ | Island-shaped, Al | Layered, B | 1.33 | 1.8 | 1.5 | Yes | No | 8:2 | 10 | 1.3 | 0.55 | 90 | 3.4 |
| Example 7 | Li(Ni_{0.8}Co_{0 .1}Mn_{0.1})_{0.99} Zr_{0.01}O₂ | Li(Ni_{0.6}Co_{0 .2}Mn_{0.2})_{0.99} Zr_{0.01}O₂ | Island-shaped, Al | Layered, B | 1.33 | 2 | 1.5 | Yes | No | 20:1 | 10.5 | 1.3 | 0.55 | 90 | 3.41 |
| Example 8 | Li(Ni_{0.8}Co_{0.1}Mn_{0.1})_{0.99}Zr_{0.01}O₂ | Li(Ni_{0.6}Co_{0 .2}Mn_{0.2})_{0.99} Zr_{0.01}O₂ | Island-shaped, Al | Layered, B | 1.33 | 2 | 1.5 | Yes | No | 1:1 | 10 | 1.3 | 0.55 | 90 | 3.4 |
| Example 9 | Li(Ni_{0.8}Co_{0.1}Mn_{0.1})_{0.99}Zr_{0.01}O₂ | Li(Ni_{0.6}Co_{0 .2}Mn_{0.2})_{0.99} Zr_{0.01}O₂ | Island-shaped, Ti | island-shaped, Al & layered, B | 1.33 | 2.2 | 1.6 | Yes | No | 8.3:1.3 | 9.6 | 1.3 | 0.58 | 90 | 3.39 |
| Example 10 | Li(Ni_{0.8}Co_{0.1}Mn_{0.1})_{0.99}Zr_{0.01}O₂ | Li(Ni_{0.6}Co_{0 .2}Mn_{0.2})_{0.99} Zr_{0.01}O₂ | Island-shaped, Ti | island-shaped, Al & layered, B | 1.33 | 2.2 | 1.6 | Yes | No | 8.3:1.3 | 11.5 | 1.3 | 0.5 | 90 | 3.43 |
| Example 11 | Li(Ni_{0.8}Co_{0.1}Mn_{0.1})_{0.99}Zr_{0.01}O₂ | Li(Ni_{0.6}Co_{0 .2}Mn_{0.2})_{0.99} Zr_{0.01}O₂ | Island-shaped, Al | Layered, B | 1.33 | 2 | 1.5 | Yes | No | 8:2 | 10 | 0.5 | 0.55 | 90 | 3.2 |
| Example 12 | Li(Ni_{0.8}Co_{0.1}Mn_{0.1})_{0.99}Zr_{0.01}O₂ | Li(Ni_{0.6}Co_{0 .2}Mn_{0.2})_{0.99} Zr_{0.01}O₂ | Island-shaped, Al | Layered, B | 1.33 | 2 | 1.5 | Yes | No | 8:2 | 10 | 2 | 0.55 | 90 | 3.5 |
| Example 13 | Li(Ni_{0.8}Co_{0.1}Mn_{0.1})_{0.99}Zr_{0.01}O₂ | Li(Ni_{0.6}Co_{0 .2}Mn_{0.2})_{0.99} Zr_{0.01}O₂ | Island-shaped, Al | Layered, B | 1.33 | 8 | 1.5 | Yes | No | 8:2 | 10 | 1.3 | 0.55 | 90 | 3.4 |
| Example 14 | Li(Ni_{0.8}Co_{0.1}Mn_{0.1})_{0.99}Zr_{0.01}O₂ | Li(Ni_{0.6}Co_{0 .2}Mn_{0.2})_{0.99} Zr_{0.01}O₂ | Island-shaped, Ti | Island-shaped, Ti | 1.33 | 1.5 | 2 | Yes | No | 8.3:1.3 | 9.6 | 1.3 | 0.58 | 90 | 3.39 |
| Example 15 | Li(Ni_{0.8}Co_{0.1}Mn_{0.1})_{0.99}Zr_{0.01}O₂ | Li(Ni_{0.6}Co₀0 _{.2}Mn_{0.2})_{0.99} Zr_{0.01}O₂ | Island-shaped, Ti | Island-shaped, Ti | 1.33 | 2.2 | 2 | Yes | No | 100:1 | 9.8 | 1.3 | 0.56 | 90 | 3.41 |
| Example 16 | Li(Ni_{0.8}Co_{0.1}Mn_{0.1})_{0.99}Zr_{0.01}O₂ | Li(Ni_{0.6}Co_{0 .2}Mn_{0.2})_{0.99} Zr_{0.01}O₂ | Island-shaped, Ti | island-shaped, Al & layered, B | 1.33 | 2.2 | 1.6 | Yes | No | 8.3:1.3 | 5 | 1.3 | 0.58 | 90 | 3.2 |
| Example 17 | Li(Ni_{0.8}Co_{0.1}Mn_{0.1})_{0.99}Zr_{0.01}O₂ | Li(Ni_{0.6}Co_{0 .2}Mn_{0.2})_{0.99} Zr_{0.01}O₂ | Island-shaped, Ti | island-shaped, Al & layered, B | 1.33 | 2.2 | 1.6 | Yes | No | 8.3:1.3 | 20 | 1.3 | 0.58 | 90 | 3.5 |
| Example 18 | Li(Ni_{0.8}Co_{0.1}Mn_{0.1})_{0.99}Zr_{0.01}O₂ | Li(Ni_{0.6}Co_{0 .2}Mn_{0.2})_{0.99} Zr_{0.01}O₂ | Island-shaped, Ti | Island-shaped, Ti & layered, B | 1.33 | 2.2 | 1.6 | Yes | No | 8.3:1.3 | 9.8 | 0.4 | 0.36 | 90 | 3.41 |
| Example 19 | Li(Ni_{0.8}Co_{0.1}Mn_{0.1})_{0.99}Zr_{0.01}O₂ | Li(Ni_{0.6}Co_{0 .2}Mn_{0.2})_{0.99} Zr_{0.01}O₂ | Island-shaped, Ti | Island-shaped, Ti & layered, B | 1.33 | 2.2 | 1.6 | Yes | No | 8.3:1.3 | 9.8 | 5 | 0.89 | 90 | 3.41 |
| Example 20 | Li(Ni_{0.6}Co_{0.2}Mn_{0.2})_{0.99}Zr_{0.01}O₂ | Li(Ni_{0.8}Co_{0 .1}Mn_{0.1})_{0.99} Zr_{0.01}O₂ | Island-shaped, Al | Layered, B | 0.75 | 2 | 1.5 | Yes | No | 8:2 | 10 | 1.3 | 0.55 | 90 | 3.4 |
| Comparative Example 1 | Li(Ni_{0.8}Co_{0.1}Mn_{0.1})_{0.99}Zr_{0.01}O₂ | Li(Ni_{0.6}Co_{0 .2}Mn_{0.2})_{0.99} Zr_{0.01}O₂ | Island-shaped, Al | Layered, B | 1.33 | 2 | 1.5 | No | No | 8:2 | 10 | 1.3 | 0.55 | 90 | 3.4 |
| Comparative Example 2 | Li(Ni_{0.8}Co_{0.1}Mn_{0.1})_{0.99}Zr_{0.01}O₂ | Li(Ni_{0.6}Co_{0 .2}Mn_{0.2})_{0.99} Zr_{0.01}O₂ | Island-shaped, Al | Layered, B | 1.33 | 2 | 1.5 | No | Yes | 8:2 | 10 | 1.3 | 0.55 | 90 | 3.4 |
| Comparative Example 3 | Li(Ni_{0.8}Co_{0.1}Mn_{0.1}O₂ | LiNi_{0.6}Co_{0. 2}Mn_{0.2}O₂ | / | / | 1.33 | 2.2 | 1.6 | Yes | No | 8.3:1.3 | 9.8 | 1.3 | 0.58 | 90 | 3.41 |

### Material and Battery Tests

### (1) Test of chemical formulas of inner core and shell and elements contained in coating layer:

Surface scanning was performed on the primary particles of the positive electrode material (with a particle size of Dv50 particle size ± 0.3 µm) by using an SEM-EDS integrated instrument so as to determine the boundaries of the inner core, the shell, and the coating layer. Then, by using the SEM-EDS integrated instrument in a point scanning mode, ten points were selected from the inner core, the shell, and the coating layer to calculate the average value, thereby determining the chemical formulas of the inner core and the shell and the elements contained in the coating layer.

### (2) Test of aspect ratio of primary particles of inner core, aspect ratio of primary particles of shell, and aspect ratio of primary particles of positive electrode material:

Surface scanning was performed on the primary particles (with a particle size of Dv50 particle size ± 0.3 µm) of the positive electrode material by using the SEM-EDS integrated instrument so as to determine the boundaries of the inner core and the shell, and then the aspect ratio of 50 primary particles of the inner core and the aspect ratio of 50 primary particles of the shell were separately observed by scanning electron microscope images. The above test was repeated on a total of 50 primary particles of the positive electrode material, and the average value was taken as the aspect ratio of the primary particles of the inner core and the aspect ratio of the primary particles of the shell.

The primary particles of the positive electrode material (with a particle size of Dv50 particle size ± 0.3 µm) were taken to observe the aspect ratio of the primary particles by scanning electron microscope images. The above test was repeated on a total of 50 primary particles of the positive electrode material to calculate the average value, i.e., the aspect ratio of the primary particles of the positive electrode material.

### (3) Test for whether the coating layer is island-shaped coating or continuous coating:

The coating layer was analyzed by using an electron probe X-ray microanalyzer (EPMA). If the display region of the elements in the coating layer is less than 1 µm² and is discontinuously distributed, the test result indicates island-shaped coating; otherwise, it indicates layered coating.

### (4) Test of volume distribution particle sizes Dv10, Dv50, and Dv90:

Equipment model: Malvern 2000 (MasterSizer 2000) laser particle size analyzer; reference standard procedure: GB/T 19077-2016/ISO 13320:2009.

Detailed test procedure: A proper amount of a washed sample (ensuring a sample concentration that provides 8%-12% obscuration) was added to 20 mL of absolute ethanol, the mixture was subjected to ultrasonication (53 KHz/120 W) for 5 min to ensure complete dispersion of the sample, and then the sample was measured according to the GB/T 19077-2016/ISO 13320:2009 standard.

### (5) Test of average diameter of inner core and average thickness of shell:

Surface scanning was performed on the primary particles (with a particle size of Dv50 particle size ± 0.3 µm) of the positive electrode material by using the SEM-EDS integrated instrument so as to determine the boundaries of the inner core and the shell; the distance from the core of the inner core to the boundary and the distance from the core of the inner core to the outermost edge of the shell were measured on a scanning electron microscope image; the measurement was performed for 50 times in random orientations; and then the above test was repeated on 50 primary particles of the positive electrode material. The average diameter of the inner core is twice the average value of the distances from the core of the inner core to the boundary, and the average thickness of the shell is the average value of the differences between the distance from the core of the inner core to the outermost edge of the shell and the distance from the core of the inner core to the boundary.

### (6) Test of BET specific surface area:

The test was performed by using a nitrogen adsorption specific surface area analysis test method and the BET specific surface area was calculated by a BET (Brunauer Emmett Teller) method. The nitrogen adsorption specific surface area analysis test can be performed by using a Tri Star II specific surface and porosity analyzer (Micromeritics, USA), and reference can be made to GB/T 19587-2004 for the test procedures.

The detailed procedures were as follows: The sample to be tested was dried in a vacuum drying oven at 200 °C for 2 h; and 1 g of the sample to be tested was weighed and placed in a test tube, a liquid nitrogen cup was filled with liquid nitrogen and fitted over the test tube, nitrogen was used as an adsorption gas, and an adsorption-desorption curve with a relative pressure P/P0 of 0-0.99 was plotted by a specific surface and porosity analyzer. P refers to the equilibrium adsorption pressure, and P0 refers to the saturated vapor pressure. The BET specific surface area of the positive electrode active material was calculated by the BET method.

### (7) Test of particle strength of positive electrode material:

A microhardness tester (Shimadzu DUH-211S) was used to select secondary particles of the positive electrode material with a Dv50 particle size ± 0.3 µm. The particles were compressed by the movement of a probe equipped with a pressure sensor, and the particle strength was recorded.

### (8) Test of compaction density:

10 g of the positive electrode material was weighed and placed into a mold of a compaction density tester, and the tester automatically applied 30 MPa pressure to the powder until the powder was compacted. The volume of the powder can be calculated based on the cross-sectional area of the grinding tool and the thickness of the powder at this point, and the compaction density of the powder material can be determined based on the formula: compaction density = mass/volume.

### (9) Test for whether primary particles of inner core or shell are distributed in the radial direction of the inner core:

Surface scanning was performed on the primary particles (with a particle size of Dv50 particle size ± 0.3 µm) of the positive electrode material by using the SEM-EDS integrated instrument so as to determine the boundaries of the inner core and the shell, and a radial line was drawn along the core of the inner core on the scanning electron microscope image.

An angle measurement instrument was used to measure the included angles θ between 50 primary particles of the inner core (randomly selected) and the radial direction of the inner core. The above test was repeated on a total of 50 primary particles of the positive electrode material to obtain the range of the included angles θ between the primary particles of the inner core and the radial direction of the inner core. If the range of the included angle θ was ± 10°, the primary particles of the inner core were distributed in the radial direction of the inner core; otherwise, the primary particles of the inner core were not distributed in the radial direction of the inner core.

The angle measurement instrument was used to measure the included angles θ between 50 primary particles of the shell (randomly selected) and the radial direction of the inner core. The above test was repeated on a total of 50 primary particles of the positive electrode material to obtain the range of the included angles θ between the primary particles of the shell and the radial direction of the inner core. If the range of the included angle θ was ± 10°, the primary particles of the shell were distributed in the radial direction of the inner core; otherwise, the primary particles of the shell were not distributed in the radial direction of the inner core.

### (10) Test for the content of free lithium (including lithium carbonate and lithium hydroxide):

30 g of the positive electrode material was weighed, and 100 mL of pure water was added. The mixture was stirred for 30 min, left to stand for 10 min, and subjected to suction filtration to obtain a filtrate.

The acidity and alkalinity of the chemical reagent were measured by the general method (GB/T 9724-2007). An automatic two-step potentiometric titration was performed on the filtrate by using a 0.05 mol/L dilute hydrochloric acid solution as the titration solution. The following reactions occurred first: LiOH + HCl = LiCl + H₂O, and Li₂CO₃ + HCl = LiHCO₃ + LiCl. As the dilute hydrochloric acid solution was continuously added, all lithium hydroxide was converted into lithium chloride and water, and all Li₂CO₃ was converted into lithium bicarbonate and lithium chloride. At this point, the pH value was about 4.0 to 5.0, and an electrode potential jump point EP1 appeared on the potentiometric titrator. As the dilute hydrochloric acid solution continued to be added, LiHCO₃ + HCl = LiCl + CO₂ ↑ + H₂O. At this point, the pH value was about 8.0 to 9.0, and an electrode potential jump point EP2 appeared on the potentiometric titrator. The contents of Li₂CO₃ and LiOH in the samples were calculated based on the consumption amounts of dilute hydrochloric acid corresponding to EP1 and EP2 and the chemical equations.

### (11) Test of specific capacity:

At 25 °C, the battery was first discharged to 2.80 V at 1/3C and held for 30 min, then charged to 4.25 V at a constant current of 1/3C, and then discharged to 2.80 V at 1/3C. The measured value was denoted as C₀. Finally, the specific capacity of the material was obtained by dividing C₀ by the mass of the active substance.

### (12) Test of cycle capacity retention rate:

Under the condition of 25 °C, the battery was charged to 4.25 V at a constant current of 1/3C, then charged to 0.05C at a constant voltage of 4.25 V, and discharged to 2.80 V at 1/3C. This constituted the first cycle, and the discharge capacity of the first cycle was denoted as C0. The cycle operation was repeated as described above. The discharge capacity of the n-th cycle was denoted as Cn, the capacity retention rate of each cycle was Cn/C0, and the capacity retention rate after 100 cycles was calculated.

### (13) Test of capacity retention rate after storage at 60 °C for 50 days:

At 25 °C, the battery was charged to 4.25 V at a constant current of 1/3C, then charged to 0.05C at a constant voltage of 4.25 V, and then discharged to 2.8 V at a constant current of 1/3C. The measured discharge capacity was denoted as C0, and the battery was charged again to 4.25 V at a constant current of 1/3C, and then charged to 0.05C at a constant voltage of 4.25 V.

The fully charged battery was placed in a constant-temperature furnace at 60 °C and stored for 50 days, and then taken out. At 25 °C, the battery was charged to 4.25 V at a constant current of 1/3C, then charged to 0.05C at a constant voltage of 4.25 V, and then discharged to 2.8 V at a constant current of 1/3C. The measured discharge capacity was Cn, and the capacity retention rate was calculated as Cn/C0.

The above results are shown in Tables 3 and 4.

**Table 4. Battery Test Results of Examples 1 to 20 and Comparative Examples 1 to 3**

| | Specific capacity (mAh/g) | Capacity retention rate after 100 cycles at 25 °C | Capacity retention rate after storage at 60 °C for 50 days |
|---|---|---|---|
| Example 1 | 205 | 96.80% | 94.50% |
| Example 2 | 200 | 97.90% | 95.30% |
| Example 3 | 207 | 96.00% | 94.00% |
| Example 4 | 204 | 96.90% | 94.80% |
| Example 5 | 207 | 97.20% | 94.90% |
| Example 6 | 202 | 96.00% | 94.00% |
| Example 7 | 207 | 95.80% | 93.50% |
| Example 8 | 200 | 97.50% | 95.50% |
| Example 9 | 206 | 96.50% | 94.10% |
| Example 10 | 205.2 | 96.30% | 93.90% |
| Example 11 | 205 | 96.80% | 94.50% |
| Example 12 | 205 | 96.80% | 94.50% |
| Example 13 | 210 | 94.20% | 92.50% |
| Example 14 | 190 | 94.90% | 93.30% |
| Example 15 | 196 | 95.70% | 93.30% |
| Example 16 | 210 | 90.40% | 88.90% |
| Example 17 | 208 | 89.00% | 88.50% |
| Example 18 | 190 | 96.90% | 94.00% |
| Example 19 | 210 | 90.90% | 86.00% |
| Example 20 | 190 | 94.20% | 91.20% |
| Comparative Example 1 | 185 | 85.00% | 86.20% |
| Comparative Example 2 | 184 | 84.50% | 86.00% |
| Comparative Example 3 | 180 | 80.00% | 81.20% |

According to the results described above, it can be seen that:
Compared with the battery prepared by using the positive electrode material of Comparative Example 1, in which the primary particles of the inner core are not distributed in the radial direction of the inner core and the primary particles of the shell are not distributed in the radial direction of the inner core, the batteries in Examples 1 to 20 of the present application exhibit higher specific capacity, higher cycle capacity retention rate, and higher high-temperature storage performance.

Compared with the battery prepared by using the positive electrode material of Comparative Example 2, in which the primary particles of the inner core are not distributed in the radial direction of the inner core and the primary particles of the shell are distributed in the radial direction of the inner core, the batteries in Examples 1 to 20 of the present application exhibit higher specific capacity, higher cycle capacity retention rate, and higher high-temperature storage performance.

Compared with Comparative Example 3, in which neither the inner core nor the shell of the positive electrode material was doped with M2 elements, the batteries in Examples 1 to 20 of the present application exhibit higher specific capacity, higher cycle capacity retention rate, and higher high-temperature storage performance.

Compared with the battery prepared by using the positive electrode material of Example 13, which has a relatively high aspect ratio of primary particles of the inner core, the batteries in Examples 1 and 5 to 6 of the present application exhibit higher cycle capacity retention rate and higher high-temperature storage performance.

Compared with the battery prepared by using the positive electrode material of Example 16, which has a relatively small Dv50 particle size, the batteries in Examples 9 and 10 of the present application exhibit higher cycle capacity retention rate and higher high-temperature storage performance.

Compared with the battery prepared by using the positive electrode material of Example 17, which has a relatively large Dv50 particle size, the batteries in Examples 9 and 10 of the present application exhibit higher cycle capacity retention rate and higher high-temperature storage performance.

Compared with the battery prepared by using the positive electrode material of Example 20, in which the ratio of the nickel content in the inner core to the nickel content in the shell is less than 1, the battery in Example 1 of the present application exhibits higher specific capacity, higher cycle capacity retention rate, and higher high-temperature storage performance.

It should be noted that the present application is not limited to the embodiments described above. The embodiments described above are merely examples, and any embodiments having a structure substantially identical to the technical concept and exerting the same functional effects within the scope of the technical solutions of the present application are all included within the technical scope of the present application. Furthermore, without departing from the spirit of the present application, various modifications that can be conceived by those skilled in the art to the embodiments, as well as other embodiments formed by combining some of the constituent elements of the embodiments, are also included within the scope of the present application.

## Claims

1. A positive electrode material, comprising an inner core and a shell coating the inner core, wherein the inner core and the shell each comprise primary particles, most of the primary particles in the inner core are distributed in a radial direction of the inner core, and a distribution of most of the primary particles in the shell is different from a radial distribution of the inner core; and
the inner core and the shell independently comprise Liₐ(NiₓCo_{y}M1_{(1-x-y)})_{1-b}M2_{b}O_{z},
wherein
the M1 of the inner core and the shell independently comprises one or two elements of Mn and Al,
the M2 of the inner core and the shell independently comprises one or more elements of Ti, Na, K, Zr, Sr, Sb, Mo, W, Nb, Y, Te, La, B, F, Cl, and P,
the a of the inner core and the shell is independently greater than 0.9 and less than 1.2,
the x of the inner core and the shell is independently greater than or equal to 0.5 and less than 1,
the y of the inner core and the shell is independently greater than 0 and less than or equal to 0.2,
the 1-x-y of the inner core and the shell is independently greater than 0 and less than or equal to 0.50,
the b of the inner core and the shell is independently greater than 0 and less than or equal to 0.02, and
the z of the inner core and the shell is independently greater than 1.8 and less than 2.2.

2. The positive electrode material according to claim 1, wherein the a of the inner core and the shell is independently 1; and/or
the x of the inner core and the shell is independently greater than or equal to 0.5 and less than or equal to 0.9; and/or
the y of the inner core and the shell is independently greater than or equal to 0.05 and less than or equal to 0.2; and/or
the 1-x-y of the inner core and the shell is independently greater than 0 and less than or equal to 0.3; and/or
the z of the inner core and the shell is independently 2.

3. The positive electrode material according to claim 1 or 2, wherein the M2 of the inner core comprises one or more elements of Zr, Sr, Y, Na, K, W, Nb, Sb, La, Ti, and Mo; and the M2 of the shell comprises one or more elements of Zr, Sr, Sb, La, F, Cl, B, P, Ti, and Te.

4. The positive electrode material according to any one of claims 1 to 3, wherein an aspect ratio of the primary particles of the inner core is greater than an aspect ratio of the primary particles of the shell.

5. The positive electrode material according to any one of claims 1 to 4, wherein the aspect ratio of the primary particles of the inner core is greater than or equal to 1.5 and less than or equal to 8.

6. The positive electrode material according to any one of claims 1 to 5, wherein the x of the inner core is greater than the x of the shell.

7. The positive electrode material according to any one of claims 1 to 6, wherein a ratio of the x of the inner core to the x of the shell is greater than 1 and less than 2.

8. The positive electrode material according to any one of claims 1 to 7, wherein a ratio of an average diameter of the inner core to an average thickness of the shell is 1:1 to 100:1.

9. The positive electrode material according to any one of claims 1 to 8, further comprising a first coating layer coating the shell and a second coating layer coating the first coating layer, wherein the first coating layer coats the shell in an island shape, and/or the second coating layer continuously coats the first coating layer.

10. The positive electrode material according to claim 9, wherein the first coating layer and the second coating layer independently comprise one or more elements of Sr, B, Al, Ti, Zr, Nb, W, F, La, Ce, C, and Co.

11. The positive electrode material according to any one of claims 1 to 10, wherein a Dv50 particle size of the positive electrode material is greater than or equal to 5 µm and less than or equal to 20 µm; and/or
a Span of the positive electrode material is greater than or equal to 0.4 and less than or equal to 5, wherein
the Span of the positive electrode material = (Dv90 particle size - Dv10 particle size)/Dv50 particle size; and/or
a BET specific surface area of the positive electrode material at a temperature of liquid nitrogen is 0.3 cm²/g to 1.5 cm²/g; and/or
a compaction density of the positive electrode material at 30 MPa is 3.2 g/cm³ to 3.5 g/cm³.

12. The positive electrode material according to any one of claims 1 to 11, wherein
a mass content of free lithium in the positive electrode material is less than 3000 ppm.

13. A method for preparing a positive electrode material, comprising the following steps:
adding a first solution to an alkali or a solution thereof for a reaction, at an addition rate of the first solution of 12 L/h to 29 L/h, to obtain a precursor 1, wherein the first solution comprises a nickel source, a cobalt source, and a source of an M1 element;
adding a second solution to the precursor 1 and the alkali or the solution thereof for a reaction, at an addition rate of the second solution of 12 L/h to 25 L/h, to obtain a precursor 2, wherein the second solution comprises the nickel source, the cobalt source, and the source of the M1 element; and
mixing the precursor 2, a lithium source, and a source of an M2 element, and sintering the mixture to obtain a sintered product, i.e., the positive electrode material.

14. The method according to claim 13, wherein the positive electrode material comprises an inner core and a shell coating the inner core, the inner core and the shell each comprising primary particles, wherein most of the primary particles in the inner core are distributed in a radial direction of the inner core, and a distribution of most of the primary particles in the shell is different from a radial distribution of the inner core; and
the inner core and the shell independently comprise Liₐ(NiₓCo_{y}M1_{(1-x-y)})_{1-b}M2_{b}O_{z},
wherein
the M1 of the inner core and the shell independently comprises one or two elements of Mn and Al,
the M2 of the inner core and the shell independently comprises one or more elements of Ti, Na, K, Zr, Sr, Sb, Mo, W, Nb, Y, Te, La, B, F, Cl, and P,
the a of the inner core and the shell is independently greater than 0.9 and less than 1.2,
the x of the inner core and the shell is independently greater than or equal to 0.5 and less than 1,
the y of the inner core and the shell is independently greater than 0 and less than or equal to 0.2,
the 1-x-y of the inner core and the shell is independently greater than 0 and less than or equal to 0.50,
the b of the inner core and the shell is independently greater than 0 and less than or equal to 0.02, and
the z of the inner core and the shell is independently greater than 1.8 and less than 2.2.

15. The method according to claim 13, further comprising the following steps:
mixing the sintered product with a first coating starting material, and sintering the mixture to obtain an intermediate product; and
mixing the intermediate product with a second coating starting material, and sintering the mixture to obtain the positive electrode material comprising two coating layers, wherein
the positive electrode material comprises an inner core, a shell coating the inner core, a first coating layer coating the shell, and a second coating layer coating the first coating layer, the inner core and the shell each comprising primary particles, wherein most of the primary particles in the inner core are distributed in a radial direction of the inner core, and a distribution of most of the primary particles in the shell is different from a radial distribution of the inner core; and
the inner core and the shell independently comprise Liₐ(NiₓCo_{y}M1_{(1-x-y})_{1-b}M2_{b}O_{z}, and the first coating layer and the second coating layer independently comprise one or more elements of Sr, B, Al, Ti, Zr, Nb, W, F, La, Ce, C, and Co, wherein
the M1 of the inner core and the shell independently comprises one or two elements of Mn and Al,
the M2 of the inner core and the shell independently comprises one or more elements of Ti, Na, K, Zr, Sr, Sb, Mo, W, Nb, Y, Te, La, B, F, Cl, and P,
the a of the inner core and the shell is independently greater than 0.9 and less than 1.2,
the x of the inner core and the shell is independently greater than or equal to 0.5 and less than 1,
the y of the inner core and the shell is independently greater than 0 and less than or equal to 0.2,
the 1-x-y of the inner core and the shell is independently greater than 0 and less than or equal to 0.50,
the b of the inner core and the shell is independently greater than 0 and less than or equal to 0.02, and
the z of the inner core and the shell is independently greater than 1.8 and less than 2.2.

16. The method according to any one of claims 13 to 15, wherein in the step of preparing the precursor 2, after the reaction, a reaction product is subjected to aging to obtain the precursor 2.

17. The method according to claim 16, wherein in the step of preparing the precursor 2, a temperature of the aging is 30 °C to 80 °C, and/or a duration of the aging is 5 h to 24 h.

18. The method according to any one of claims 13 to 17, wherein
in the steps of preparing the precursor 1 and the precursor 2, a temperature of the reaction is independently 40 °C to 80 °C; and/or
in the steps of preparing the precursor 1 and the precursor 2, the reaction is performed in an inert gas atmosphere; and/or
in the steps of preparing the precursor 1 and the precursor 2, the reaction is performed at a pH value of 9 to 12; and/or
in the step of preparing the precursor 2, after the reaction or aging, the reaction product is washed and dried, wherein a temperature of the drying is 100 °C to 180 °C, and a duration of the drying is 5 h to 15 h; and/or
in the step of preparing the sintered product, a temperature of the sintering is 750 °C to 950 °C; and/or
in the step of preparing the sintered product, a duration of the sintering is 10 h to 30 h;
and/or
in the step of preparing the sintered product, the sintering is performed in an oxygen-containing atmosphere; and/or
in the steps of preparing the intermediate product and the positive electrode material comprising two coating layers, a temperature of the sintering is independently 250 °C to 700 °C; and/or
in the steps of preparing the intermediate product and the positive electrode material comprising two coating layers, a duration of the sintering is independently 5 h to 20 h; and/or
in the steps of preparing the intermediate product and the positive electrode material comprising two coating layers, the sintering is performed in an oxygen-containing atmosphere.

19. The method according to any one of claims 13 to 18, wherein
a Dv50 particle size of the precursor 1 is 4.3 µm to 17.3 µm; and/or
a Dv50 particle size of the precursor 2 is 5 µm to 20 µm; and/or
in the first solution and the second solution, a molar percentage of a nickel element in a total metal element is independently greater than 0.5 and less than 1; and/or
in the first solution and the second solution, a molar percentage of a cobalt element in a total metal element is independently greater than 0 and less than 0.2; and/or
a molar ratio of the precursor 2 to a lithium element in the lithium source is 5:6 to 10:9;
and/or
a molar ratio of a lithium element in the lithium source to the M2 element in the source of the M2 element is a:b, wherein the a is greater than 0.9 and less than 1.2, and the b is greater than 0 and less than or equal to 0.02; and/or
a mass ratio of the first coating starting material to the sintered product is greater than 0 and less than or equal to 1%; and/or
a mass ratio of the second coating starting material to the intermediate product is greater than 0 and less than or equal to 1%.

20. A positive electrode plate, comprising the positive electrode material according to any one of claims 1 to 12 or a positive electrode material prepared by the method according to any one of claims 13 to 19.

21. A battery, comprising the positive electrode material according to any one of claims 1 to 12, the positive electrode material prepared by the method according to any one of claims 13 to 19, or the positive electrode plate according to claim 20.

22. An electric device, comprising the battery according to claim 21.
